# EUROPÄISCHE PATENTSCHRIFT

(11) **EP 2 814 928 B1**
(45) Veröffentlichungstag und Bekanntmachung des Hinweises auf die Patenterteilung: **04.04.2018**
(21) Anmeldenummer: 13703433.6
(22) Anmeldetag: 12.02.2013
(51) Int. Cl.: C11D 3/00, C11D 3/37, C08G 69/14, C08G 69/26, C08L 77/02, C08L 77/06

(54) **FARBSCHÜTZENDES WASCH- ODER REINIGUNGSMITTEL**
COLOR-PROTECTING DETERGENT COMPOSITION
COMPOSITION DÉTERGENTE PROTÉGEANT LES COULEURS

(30) Priorität: 13.02.2012 EP 12155182
(43) Veröffentlichungstag der Anmeldung: 24.12.2014
(73) Patentinhaber: Henkel AG & Co. KGaA, 40589 Düsseldorf (DE)
(72) Erfinder: ETTL, Roland, 68804 Altlußheim (DE); WILMS, Axel, 67227 Frankenthal (DE); SCHMIDT, Christian, 67061 Ludwigshafen (DE); BRYM, Markus, 67117 Limburgerhof (DE); GLÜSEN, Birgit, 40591 Düsseldorf (DE); JOB, Mareile, 51375 Leverkusen (DE); PEGELOW, Ulrich, 40597 Düsseldorf (DE); TRENKA, Carolin, A-4810 Gmunden (AT)
(86) Internationale Anmeldenummer: PCT/EP2013/052719
(87) Internationale Veröffentlichungsnummer: WO 2013/120816

(56) Entgegenhaltungen:
- EP-A1- 1 671 785
- EP-A2- 0 158 260
- DE-A1- 4 328 254
- DE-A1- 19 902 506
- DE-A1-102005 023 419
- US-A- 5 656 699
- US-A1- 2005 209 125

## Beschreibung

Die vorliegende Erfindung betrifft die Verwendung aminogruppenreicher Oligoamide als farbübertragungsinhibierende Wirkstoffe beim Waschen und/oder Reinigen von Textilien sowie Wasch- oder Reinigungsmittel, welche derartige Oligoamide enthalten.

Wasch- und Reinigungsmittel enthalten neben den für den Wasch- beziehungsweise Reinigungsprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Enzyme umfassen. Zu derartigen Hilfsstoffen gehören auch Substanzen, welche verhindern sollen, dass gefärbte textile Flächengebilde nach der Wäsche einen veränderten Farbeindruck hervorrufen. Diese Farbeindrucksveränderung gewaschener, das heißt sauberer, Textilien kann zum einen darauf beruhen, dass Farbstoffanteile durch den Wasch- beziehungsweise Reinigungsprozess vom Textil entfernt werden ("Verblassen"), zum anderen können sich von andersfarbigen Textilien abgelöste Farbstoffe auf dem Textil niederschlagen ("Verfärben"). Für das Reinigen harter Oberflächen gilt sinngemäß das gleiche. Der Verfärbungsaspekt kann auch bei ungefärbten Wäschestücken eine Rolle spielen, wenn diese zusammen mit farbigen Wäschestücken gewaschen werden. Um diese unerwünschten Nebeneffekte des Entfernens von Schmutz von Textilien durch Behandeln mit üblicherweise tensidhaltigen wässrigen Systemen zu vermeiden, enthalten Waschmittel, insbesondere wenn sie als sogenannte Color- oder Buntwaschmittel zum Waschen farbiger Textilien vorgesehen sind, Wirkstoffe, die das Ablösen von Farbstoffen vom Textil verhindern oder zumindest das Ablagern von abgelösten, in der Waschflotte befindlichen Farbstoffen auf Textilien vermeiden sollen. Viele der üblicherweise zum Einsatz kommenden - in der Regel wasserlöslichen - Polymere haben allerdings eine derart hohe Affinität zu Farbstoffen, dass sie diese verstärkt von der gefärbten Faser ziehen, so dass es bei ihrem Einsatz zu Farbverlusten kommt. Außerdem zeigen manche konventionellen Farbübertragungsinhibitoren nur bei einigen Farbstoffklassen eine Leistung und können die Übertragung anderer Farbstoffklassen nicht verhindern.

Aus der Patentanmeldung DE 42 35 798 sind Copolymerisate aus N-Vinylpyrrolidon, N-Vinylimidazol, N-Vinylimidazolium-Verbindungen oder deren Mischungen, weiteren Stickstoff-haltigen, basischen ethylenisch ungesättigten Monomeren und gegebenenfalls anderen monoethylenisch ungesättigten Monomeren und deren Verwendung zur Inhibierung der Farbstoffübertragung während des Waschvorgangs bekannt. In der Patentanmeldung DE 196 21 509 werden Polymere mit einer mittleren molaren Masse über 50000 g/mol aus 5 bis 20 mol-% N-Vinylimidazol oder 4-Vinylpyridin-N-oxid, 95 bis 50 mol-% N-Vinylpyrrolidon, N-Vinyloxazolidone, Methyl-N-Vinylimidazol oder deren Mischungen und bis zu 30 mol-% anderer monoethylenisch ungesättigter Monomere für diesen Zweck beschrieben. Aus der internationalen Patentanmeldung WO 03/062362 sind wasserunlösliche Substrate, die Polyamide als Absorbermaterialien für teilchenförmigen Schmutz tragen, bekannt. Die internationale Patentanmeldung WO 2009/124908 beschreibt die Verwendung partikulärer wasserunlöslicher Polymere, darunter auch Polyamid, zur Vermeidung der Übertragung von Textilfarbstoffen von gefärbten Textilien auf ungefärbte oder andersfarbige Textilien bei deren gemeinsamer Wäsche in insbesondere tensidhaltigen wäßrigen Lösungen. Aus der internationalen Patentanmeldung WO 2009/127587 ist bekannt, dass poröse Polyamidpartikel mit bestimmtem Partikeldurchmesser und bestimmter Partikeldurchmesserverteilung, bestimmter spezifischer Oberfläche, bestimmter Ölabsorptionskapazität und Kristallinität die Übertragung von Textilfarbstoffen von gefärbten Textilien auf ungefärbte oder andersfarbige Textilien bei deren gemeinsamer Wäsche in insbesondere tensidhaltigen wäßrigen Lösungen vermeiden. Aus der Patentanmeldung DE 43 28 254 sind Farbübertragungsinhibitoren in Form wasserlöslicher, durch Polykondensation von Dicarbonsäuren mit sekundären Diaminen oder Mischungen sekundärer und primärer Diamine erhältlicher Polymere bekannt. Die Patentanmeldung DE 199 02 506 A1 offenbart den Einsatz von wasserlöslichen oder wasserdispergierbaren Polymeren auf Basis von Lysin, Arginin, Ornithin und Tryptophan als Klarspülzusatz beim Reinigen harter Oberflächen. Aus der Patentanmeldung EP 1 671 785 A1 sind Polyamide mit alicyclischem Ring in direkter Verbindung mit thermoplastischem Urethanharz bekannt. Die Patentanmeldung DE 10 2005 023 419 A1 betrifft Polyamid-Oligomere mit zahlenmittlerer Molmasse von 800 bis 5000 g/mol und einem im Verhältnis zu Carboxylgruppen vorliegenden Überschuß an NH₂-Endgruppen, deren Konzentration maximal 300 mmol/kg beträgt. Die Patentanmeldung EP 0 158 260 A2 offenbart Textilwaschmittel, die Umsetzungsprodukte aus Verbindungen mit mehr als einer Aminogruppe und Aldehyden oder Dicarbonsäuren enthalten. Aus dem Patent US 5 656 699 sind Rohrreiniger bekannt, die Reaktionsprodukte aus bifunktionellem Vernetzerwirkstoff und aminterminiertem Oligoamid aus Polyalkylenpolyamin und Dicarbonsäure enthalten. Aus der Patentanmeldung US 2005/0209125 A1 sind Waschmittel bekannt, die Polyaminoamide enthalten, deren sekundäre Aminogruppen partiell quaternisiert sind.

Überraschenderweise wurde gefunden, dass sich eine besonders gute Farbübertragungsinhibierung durch den Einsatz von aminogruppenreichen Oligoamiden ergibt.

Ein Gegenstand der Erfindung sind Wasch-, Waschzusatz-, Wäschevorbehandlungs-oder Reinigungsmittel, enthaltend einen Farbübertragungsinhibitor in Form eines Oligoamids, das wenigstens 750 µmol/g basische Aminogruppen aufweist, neben üblichen mit diesem Bestandteil verträglichen Inhaltsstoffen, wobei das Oligoamid im Wesentlichen aus Wiederholungseinheiten der Formeln la und/oder lb und gegebenenfalls Verzweigungseinheiten der Formeln II und/oder II' aufgebaut sind, 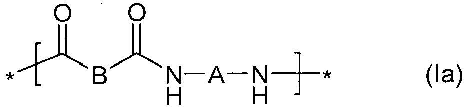 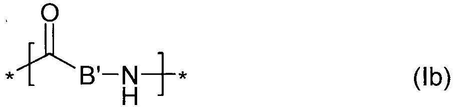 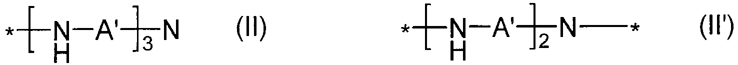 worin
A ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können, und Gruppen der Formel (A"-O)ₚ-A', worin A" für C₂-C₄-Alkandiyl steht, und p für eine ganze Zahl im Bereich von 1 bis 20 steht, wobei die Wiederholungseinheiten A"-O gleich oder verschieden sein können;
A' ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können;
B ausgewählt wird unter einer kovalenten Bindung, Alkandiyl mit 1 bis 20 C-Atomen, worin 2 miteinander verknüpfte CH₂-Gruppen gemeinsam durch eine C₅-C₇-Cycloalkandiylgruppe ersetzt sein können und C₆-C₁₄-Arylendiyl, das unsubstituiert ist oder 1 oder 2 Substituenten aufweist, die unter C₁-C₄-Alkyl, C₁-C₄-Alkoxy und SO₃H ausgewählt sind, und
B' ausgewählt wird unter Alkandiylresten mit 4 bis 20 C-Atomen;
wobei das Mittel 0,05 bis 20 Gew.-% des Oligoamids enthält

Ein weiterer Gegenstand der Erfindung ist die Verwendung von Oligoamiden, die wenigstens 750 µmol/g basische Aminogruppen aufweisen, zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen, wobei die Oligoamide im Wesentlichen aus den vorstehend definierten Wiederholungseinheiten der Formeln Ia und/oder Ib und gegebenenfalls den vorstehend definierten Verzweigungseinheiten der Formeln II und/oder II' aufgebaut sind.

Die angesprochenen Oligoamide leisten bei beiden eingangs angesprochenen Aspekten der Farbkonstanz einen Beitrag, das heißt sie vermindern sowohl das Verfärben als auch die Verblassung, wenn auch der Effekt der Verhinderung des Anfärbens, insbesondere beim Waschen weißer Textilien, am ausgeprägtesten ist. Ein weiterer Gegenstand der Erfindung ist daher die Verwendung von Oligoamiden, die wenigstens 750 µmol/g basische Aminogruppen aufweisen, zur Vermeidung der Veränderung des Farbeindrucks von Textilien bei deren Wäsche in insbesondere tensidhaltigen wässrigen Lösungen, wobei die Oligoamide im Wesentlichen aus den vorstehend definierten Wiederholungseinheiten der Formeln la und/oder Ib und gegebenenfalls den vorstehend definierten Verzweigungseinheiten der Formeln II und/oder II' aufgebaut sind. Unter der Veränderung des Farbeindrucks ist dabei keineswegs der Unterschied zwischen verschmutztem und sauberem Textil zu verstehen, sondern der Farbunterschied zwischen jeweils sauberem Textil vor und nach dem Waschvorgang.

Die Oligoamide als solche sind insbesondere neu, wenn ihr zahlenmittleres Molekulargewicht (Mₙ) im Bereich von 200 g/mol bis 5000 g/mol liegt. Daher betrifft die Erfindung auch Oligoamide, die wenigstens 750 µmol/g basische Aminogruppen und ein zahlenmittleres Molekulargewicht im Bereich von 200 g/mol bis 5000 g/mol aufweisen, und die im Wesentlichen aus Wiederholungseinheiten der Formeln la und/oder Ib und gegebenenfalls Verzweigungseinheiten der Formeln II und/oder II' aufgebaut sind, 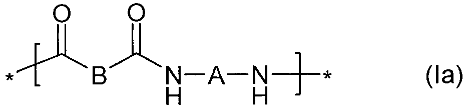 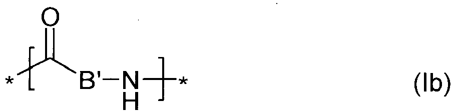 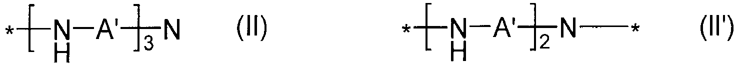 worin
A ausgewählt wird unter Alkandiylresten mit 2 bis 20 C-Atomen, worin 2 miteinander verknüpfte CH₂-Gruppen gemeinsam durch eine C₅-C₇-Cycloalkandiylgruppe ersetzt sein können, und Gruppen der Formel (A"-O)ₚ-A', worin A" für C₂-C₄-Alkandiyl steht, und p für eine ganze Zahl im Bereich von 1 bis 20 steht, wobei die Wiederholungseinheiten A"-O gleich oder verschieden sein können;
A' ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können;
B ausgewählt wird unter einer kovalenten Bindung, Alkandiylresten mit 1 bis 20 C-Atomen, worin 2 miteinander verknüpfte CH₂-Gruppen gemeinsam durch eine C₅-C₇-Cycloalkandiylgruppe ersetzt sein können und C₆-C₁₄-Arylendiyl, das unsubstituiert ist oder 1 oder 2 Substituenten aufweist, die unter C₁-C₄-Alkyl, C₁-C₄-Alkoxy und SO₃H ausgewählt sind, und
B' ausgewählt wird unter Alkandiylresten mit 4 bis 20 C-Atomen.

Unter basischen Aminogruppen werden in diesem Zusammenhang solche verstanden, die sich mittels Titration mit wässriger Salzsäurelösung bestimmen lassen.

Die Oligoamide haben ein zahlenmittleres Molekulargewicht (Mₙ) vorzugsweise im Bereich von 200 g/mol bis 5000 g/mol und insbesondere von 500 g/mol bis 3000 g/mol. Ihr gewichtsmittleres Molekulargewicht (M_{w}) liegt vorzugsweise im Bereich von 400 g/mol bis 20000 g/mol und insbesondere von 200 g/mol bis 10000 g/mol. Der die Molekulargewichtsverteilung charakterisierende Polydispersitätsindex M_{w}/Mₙ ist typischerweise eine Zahl im Bereich von 2 bis 6, vorzugsweise im Bereich von 2 bis 5 und insbesondere im Bereich von 2 bis 4. Die in Analogie zu DIN 53 727 bestimmbare Viskositätszahl der erfindungsgemäßen Oligoamide liegt in der Regel im Bereich von 2 bis 100, vorzugsweise im Bereich von 3 bis 75 und insbesondere im Bereich von 5 bis 60.

Des Weiteren weisen die Oligoamide der vorliegenden Erfindung vorzugsweise weniger als 300 µmol/g, besonders bevorzugt weniger als 100 µmol/g und insbesondere weniger als 50 µmol/g freie Carboxylgruppen auf. Demgemäß ist entsprechend einer Ausführungsform der Erfindung das Verhältnis von terminalen Aminogruppen zu terminalen Carboxylgruppen der Oligoamide größer oder gleich 1, vorzugsweise größer 2 und insbesondere größer 5.

Die Monomereinheiten, aus denen die Oligoamide der vorliegenden Erfindung aufgebaut sind, umfassen vorzugsweise im wesentlichen entweder solche, die sich von aliphatischen oder cycloaliphatischen Diaminen und aliphatischen oder cycloaliphatischen Dicarbonsäuren ableiten, oder solche, die sich von ω-Aminocarbonsäuren oder deren Lactamen ableiten. Neben diesen bifunktionellen Monomereinheiten können zusätzlich noch solche vorliegen, die sich von Monomeren mit weiteren Amino-und/oder Carboxylgruppen ableiten, wie etwa Triamine oder Diaminocarbonsäuren.

Eine weitere zur Charakterisierung eines erfindungsgemäßen Oligoamids geeignete Größe ist das Molverhältnis von Amino- zur Carboxylgruppen, einschließlich der zur Amidbildung befähigten derivatisierten Amino- beziehungsweise Carboxylgruppen, in der Gesamtheit der Monomere, die dem Oligoamid zugrunde liegen. Typischerweise liegt dieses Molverhältnis im Bereich von 0,9:1 bis 25:1, vorzugsweise im Bereich von 1,1:1 bis 15:1 und insbesondere im Bereich von 1,25:1 bis 10:1.

Die Oligoamide können als lineare oder verzweigte Oligomere vorliegen, die gegebenenfalls zusätzlich vernetzt sein können.

Gemäß einer ersten bevorzugten Ausführungsform sind die Oligoamide verzweigt. Dabei sind die Verzweigungspunkte vorzugsweise Stickstoffatome einer tertiären Aminogruppe oder einer zweifach substituierten Amidgruppe. Sofern die Oligoamide verzweigt sind, liegt ihr Verzweigungsgrad typischerweise im Bereich von 0,05 mol/kg bis 15 mol/kg, vorzugsweise im Bereich von 0,1 bis 7,5 mol/kg und insbesondere im Bereich von 0,2 bis 4 mol/kg. Gemäß einer zweiten Ausführungsform sind die Oligoamide der vorliegenden Erfindung linear. Gemäß einer dritten Ausführungsform sind die Oligoamide der vorliegenden Erfindung vernetzt. Die Oligoamide sind vorzugsweise aus aliphatischen und gegebenenfalls cycloaliphatischen und/oder aromatischen Monomeren hergestellt. Daraus ergibt sich, dass die Oligoamide im wesentlichen aus aliphatischen Wiederholungseinheiten und gegebenenfalls cycloaliphatischen und/oder aromatischen Wiederholungseinheiten bestehen. Dies ist so zu verstehen, dass die Molekülteile der Oligoamide, welche die funktionellen Gruppen, also beispielsweise Aminogruppen und insbesondere Carboxamid-Gruppen, miteinander verbinden, aliphatisch, cycloaliphatisch und/oder aromatisch sind.

Die Wiederholungseinheiten la und Ib gehen in der Regel auf die Oligomerisierung von Diaminen und Dicarbonsäuren oder Aminocarbonsäuren oder deren Lactamen zurück. Die Wiederholungseinheiten II und II' sind üblicherweise auf eine Oligomerisation in Gegenwart von Aminoverbindungen mit einer sekundären und zwei primären Aminogruppen oder mit einer tertiären und 3 primären Aminogruppen zurückzuführen.

Der Begriff "Alkandiylrest mit 2 bis 20 C-Atomen", wie hierin verwendet, bezeichnet eine von einem geradkettigen oder verzweigten C₂-C₂₀-Alkan abgeleitete bivalente Gruppe, wie beispielsweise Methylen, 1,2-Ethandiyl, 1,2-Propandiyl, 1,3-Propandiyl, 1,2-Butandiyl, 1,3-Butandiyl, 1,4-Butandiyl, 2-Methyl-1,2-propandiyl, 1,6-Hexandiyl, 1,7-Heptandiyl, 1,9-Nonandiyl, 1,12-Dodecan-diyl.

Der Begriff "C₅-C₇-Cycloalkandiylgruppe", wie hierin verwendet, bezeichnet eine von einem Cycloalkan mit 5 bis 7 C-Atomen abgeleitete bivalente Gruppe, wie beispielsweise 1,2-Cyclopentandiyl, 1,3-Cyclopentandiyl, 1,2-Cyclohexandiyl, 1,3-Cyclohexandiyl, 1,4-Cyclohexandiyl oder 1,4-Cycloheptandiyl.

In der Wiederholungseinheit der Formel la wird der Rest A vorzugsweise ausgewählt aus C₂-C₁₀-Alkandiyl, C₅-C₂₀-Alkandiyl worin 1, 2, 3 oder 4 nicht benachbarte CH₂-Gruppen jeweils durch NH-Gruppen ersetzt sind, und Gruppen der Formel (A"-O)ₚ-A' worin A" für 1,2-Ethandiyl, 1,2-Propandiyl, 1,3-Propandiyl oder 1,4-Butandiyl, A' für einen als bevorzugt genannten Rest A steht und p für eine ganze Zahl im Bereich von 1 bis 10 steht.

In diesem Zusammenhang werden die Reste A aus der Gruppe der C₂-C₁₀-Alkandiyle insbesondere ausgewählt unter C₂-C₈-Alkandiyl, speziell unter 1,2-Ethandiyl, 1,2-Propandiyl, 1,3-Propandiyl, 1,3-Butandiyl, 1,4-Butandiyl, 2-Methyl-1,2-propandiyl, 1,6-Hexandiyl, 1,7-Heptandiyl, 1,6-Heptandiyl und 1,8-Octandiyl und besonders bevorzugt unter 1,4-Butandiyl, 1,5-Heptandiyl, 1,6-Hexandiyl und 1,7-Heptandiyl.

Die Reste A aus der Gruppe der C₅-C₂₀-Alkandiyle, die anstelle von 1, 2, 3 oder 4 nicht benachbarten CH₂-Gruppen jeweils NH-Gruppen aufweisen, werden insbesondere ausgewählt aus Resten der Formel [(C₂-C₈)-Alkandiyl-NH]ₒ-(C₃-C₈)-alkandiyl, wobei die Alkandiyleinheiten unabhängig voneinander gewählt sind und o ein ganze Zahl im Bereich von 1 bis 10 und vorzugsweise von 1 bis 6 ist. Speziell werden solche Reste A ausgewählt aus Resten der Formel [(C₂-C₆)-Alkandiyl-NH]ₒ-(C₃-C₆)-alkandiyl, wobei o 1, 2 oder 3 ist, besonders bevorzugt aus (C₂-C₆)-Alkandiyl-NH-(C₃-C₆)-alkandiyl, beispielsweise 1,6-Hexandiyl-NH-1,6-hexandiyl oder 1,3-Propandiyl-NH-1,3-propandiyl, und [(C₂-C₆)-Alkandiyl-NH]₂-(C₃-C₆)-alkandiyl, beispielsweise 1,3-Propandiyl-NH-1,2-ethandiyl-NH-1,3-propandiyl.

Die vorgenannten bevorzugten Reste A der Formel (A'-O)ₚ-A' werden insbesondere ausgewählt aus (1,2-Propandiyl-O)_{q}-1,2-propandiyl, (1,2-Ethandiyl-O)_{q}-1,2-ethandiyl, wobei q jeweils für 3, 4, 5, 6, 7 oder 8 steht, und (C₂-C₆)-Alkandiyl-O-[(C₂-C₆)-alkandiyl-O]ᵣ-(C₂-C₆)-alkandiyl, wobei r für 1, 2, 3 oder 4 steht. Besonders bevorzugt werden solche Reste A ausgewählt aus (1,2-Propandiyl-O)_{q}-1,2-propandiyl, wobei q 4, 5, 6 oder 7 ist, und (C₃-C₅)-Alkandiyl-O-[(C₂-C₅)-alkandiyl-O]ᵣ-(C₃-C₅)-alkandiyl, wobei r 1, 2 oder 3 ist, speziell unter (1,2-Propandiyl-O)_{q}-1,2-propandiyl mit q 5 oder 6 ist, 4,9-Dioxadodecan-1,12-diaminyl und 4,7,10-Trioxatridecan-1,13-diaminyl.

In den Wiederholungseinheiten der Formeln II und II' werden die Reste A' unabhängig voneinander vorzugsweise unter den für den Rest A als bevorzugt benannten Resten ausgewählt.

Zusätzlich zu den vorgenannten Wiederholungseinheiten können die Oligoamide der vorliegenden Erfindung auch Wiederholungseinheiten enthalten, die sich von solchen der Formel la dadurch unterscheiden, dass die Einheit -NH-A-NH- durch eine bivalenten Heterocyclyl-Rest mit mindestens 2 Stickstoffatomen im Ring und einem optionalen (C₁-C₁₀)-Aminoalkyl-Substituenten, ersetzt ist. Der Begriff "Heterocyclyl" bezeichnet hier einen 5- oder 6-gliedrigen monocyclischen oder einen 8- bis 10-gliedrigen bicyclischen heterocyclischen Rest der 2 Stickstoffatome und optional 1 oder 2 weitere Heteroatome ausgewählt unter N, O und S als Ringatome enthält, wobei der heterocyclische Rest gesättigt, teilweise gesättigt oder aromatisch sein kann. Innerhalb des Oligoamids ist der heterocyclische Rest entweder über zwei Ringstickstoffatome oder über ein Ringstickstoffatom sowie das Stickstoffatom der optionalen AminoalkylGruppe gebunden. Der heterocyclische Rest leitet sich daher vorzugsweise von Heterocyclen ab, die entweder zwei sekundäre Aminogruppen, oder, falls er mit einer Aminoalkyl-Gruppe substituiert ist, eine sekundäre Aminogruppe enthalten. Beispiele für solche Heterocyclen sind Imidazol, Pyrazol, Triazol, Tetrazol, Benzimidazol, Purin und Piperazin.

Die genannten eine bivalente Heterocyclyleinheit enthaltenden Wiederholungseinheiten werden vorzugsweise ausgewählt aus monocyclischen gesättigten und teilweise gesättigten 5- oder 6-gliedrigen monocyclischen Heterocyclen mit 2 Stickstoffen, wie Piperazin, und monocyclischen teilweise gesättigten und aromatischen 5- oder 6-gliedrigen monocyclischen Heterocyclen mit 2 Stickstoffatomen, die mit einer (C₁-C₁₀)-Aminoalkyl-Gruppe N-substituiert sind, wie N-(3-Aminopropyl)imidazol.

In der Wiederholungseinheit der Formel la wird der Rest B vorzugsweise ausgewählt aus einer kovalenten Bindung und C₁-C₁₀-Alkandiyl. Insbesondere wird B ausgewählt aus C₁-C₇-Alkandiyl, speziell unter Methylen, 1,2-Ethandiyl, 1,2-Propandiyl, 1,3-Propandiyl, 1,3-Butandiyl, 1,4-Butandiyl, 2-Methyl-1,2-propandiyl, 1,5-Pentandiyl, 1,6-Hexandiyl und 1,7-Heptandiyl, besonders bevorzugt aus 1,3-Propandiyl, 1,4-Butandiyl, 1,5-Heptandiyl und 1,6-Hexandiyl. Insbesondere bevorzugt ist B 1,4-Butandiyl.

In der Wiederholungseinheit der Formel Ib wird der Rest B' vorzugsweise ausgewählt aus C₄-C₁₀-Alkandiyl, insbesondere aus C₄-C₆-Alkandiyl, speziell unter 1,4-Butandiyl, 1,5-Pentandiyl und 1,6-Hexandiyl, und besonders bevorzugt ist B' 1,6-Hexandiyl.

Zusätzlich zu den zuvor für den Rest B genannten Bedeutungen kann B auch aus der Gruppe der bivalenten C₆-C₁₄-Arylen-Reste, also der Gruppe der C₆-C₁₄-Arylendiyle, ausgewählt sein, bei denen es sich um bivalente mono- oder polycyclische aromatische Kohlenwasserstoffe handelt. Die C₆-C₁₄-Arylendiyle können unsubstituiert sein oder 1 oder 2 Substituenten aufweisen, die unter C₁-C₄-Alkyl, C₁-C₄-Alkoxy und SO₃H, insbesondere unter C₁-C₂-Alkyl, C₁-C₂-Alkoxy und SO₃H ausgewählt sind. Reste B aus der Gruppe der C₆-C₁₄-Arylendiyle werden vorzugsweise ausgewählt aus C₆-C₁₀-Arylendiyl, speziell unter 1,3-Phenylen, 1,4-Phenylen, 1,4-Naphthylen, 1,3-Naphthylen, 1,5-Naphthylen, 2,6-Naphthylen, 2,7-Naphthylen und 1,6-Naphthylen, die unsubstituiert sind oder 1 oder 2 Substituenten ausgewählt aus Methyl, Ethyl, Methoxy und SO₃H aufweisen.

Die Oligoamide der vorliegenden Erfindung können mit den aus dem Stand der Technik bekannten Verfahren zur Herstellung von Polyamiden und Oligoamiden hergestellt werden. Hierzu eignen sich insbesondere Polykondensationsreaktionen von Monomeren die primäre oder sekundäre Aminogruppen oder Isocyanatgruppen und/oder Carboxylgruppen oder davon abgeleitete amidbildende Gruppen enthalten. Bevorzugt sind Monomere M1 mit zwei oder mehreren, insbesondere zwei oder drei, primären Aminogruppen oder Isocyanatgruppen, Monomere M2 mit zwei oder drei, insbesondere zwei Carboxylgruppen oder davon abgeleiteten amidbildenden Gruppen, und Monomere M3, bei denen es sich entweder um Verbindungen mit einer oder zwei, insbesondere mit einer primären Aminogruppe oder Isocyanatgruppe und mit einer oder zwei, insbesondere einer Carboxylgruppe oder einer entsprechenden amidbildenden Gruppe, oder um von diesen Verbindungen abgeleiteten Lactame handelt. Im Folgenden werden die Monomere M2 und M3 zusammengenommen als amidbildende Verbindungen bezeichnet.

Als Monomere M1 werden insbesondere aliphatische und gegebenenfalls cycloaliphatische und/oder aromatische Di- und Triamine mit zwei oder drei, insbesondere zwei, primären Aminogruppen verwendet.

Gemäß einer besonders bevorzugten Ausführungsform der Erfindung sind Monomere M1 ausgewählt unter Diaminen der Formel V1,

H₂N-A-NH₂ (V1)

worin der bivalente Rest A die voranstehend beschriebenen Bedeutungen, insbesondere die hierin als bevorzugt genannten Bedeutungen, hat. Besonders bevorzugte Monomere M1 sind Diamine V1, in denen A 1,4-Butandiyl, 1,5-Pentandiyl, 1,6-Hexandiyl oder 1,7-Heptandiyl und speziell 1,6-Hexandiyl ist. Bei diesen bevorzugten Monomeren M1 handelt es sich demnach um 1,4-Diaminobutan, 1,5-Diaminopentan, 1,6-Diaminohexan oder 1,7-Diaminoheptan und speziell um 1,6-Diaminohexan.

Als weitere Monomere mit zumindest zwei Aminogruppen kommen für die Herstellung der Oligoamide auch die zuvor beschriebenen Heterocyclen in Betracht, die entweder zwei sekundäre Amingruppen, oder, falls sie mit einer (C₁-C₁₀)-Aminoalkyl-Gruppe substituiert sind, eine sekundäre Aminogruppe enthalten. Im Weiterein werden solche Heterocyclen als Monomere M1' bezeichnet. Bevorzugte Monomere M1' sind gesättigte und teilweise gesättigte 6-gliedrige Ringe, die zwei sekundäre Aminogruppen als Ringmitglieder enthalten, insbesondere Piperazin, und aromatische 5- oder 6-gliedrige Ringe mit einer sekundären und einer tertiären Aminogruppe sowie einer N-verknüpften (C₁-C₆)-Aminoalkyl-Gruppe, insbesondere die N-(C₁-C₆)-Aminoalkylsubstituierten Derivate von Imidazol, Pyrazol, Triazol, Tetrazol, Benzimidazol, Purin und Piperazin, speziell N-(3-Aminopropyl)imidazol.

Als Monomere M2 werden insbesondere aliphatische und gegebenenfalls cycloaliphatische und/oder aromatische Dicarbonsäuren und deren amidbildende Derivate verwendet. Bei den amidbildenden Derivaten handelt es sich insbesondere um die vorgenannten Dicarbonsäuren, bei denen eine oder beide Carboxylgruppen durch Estergruppen, Nitrilgruppen, Carbonsäureanhydridgruppen und Carbonsäurehalogenidgruppen, vorzugsweise Carbonsäurechloridgruppen, ersetzt sind.

Gemäß einer besonders bevorzugten Ausführungsform der Erfindung sind Monomere M2 ausgewählt unter Dicarbonsäuren der Formel V2,

HOOC-B-COOH (V2)

und deren amidbildenden Derivaten, worin
B ausgewählt wird aus einer kovalenten Bindung, Alkandiylresten mit 1 bis 20 C-Atomen, worin 2 miteinander verknüpfte CH₂-Gruppen gemeinsam durch eine C₅-C₇-Cycloalkandiylgruppe ersetzt sein können, und Arylen, das unsubstituiert ist oder 1, 2 oder 3 Substituenten aufweist, die unter C₁-C₄-Alkyl, C₁-C₄-Alkoxy und SO₃H ausgewählt werden.

Besonders bevorzugte Monomere M2 sind Dicarbonsäuren V2 und deren amidbildende Derivate, bei denen B ausgewählt wird aus einer kovalenten Bindung und C₁-C₁₀-Alkandiyl, insbesondere unter C₁-C₇-Alkandiyl, speziell unter Methylen, 1,2-Ethandiyl, 1,2-Propandiyl, 1,3-Propandiyl, 1,3-Butandiyl, 1,4-Butandiyl, 2-Methyl-1,2-propandiyl, 1,5-Pentandiyl, 1,6-Hexandiyl und 1,7-Heptandiyl, besonders bevorzugt unter 1,3-Propandiyl, 1,4-Butandiyl, 1,5-Heptandiyl und 1,6-Hexandiyl. Besonders bevorzugte Monomere sind Dicarbonsäuren V2 und deren amidbildende Derivate, bei denen B 1,4-Butandiyl ist. Bei diesem besonders bevorzugten Monomer M2 handelt es sich demnach um Adipinsäure und deren amidbildende Derivate.

Als Monomere M3 werden insbesondere aliphatische ω-Aminocarbonsäuren mit 4, 5 oder 6 Kohlenstoffatomen und deren Lactame verwendet. Bevorzugte Monomere M3 sind 4-Aminobutansäure, 5-Aminopentansäure und 6-Aminohexansäure sowie deren Lactame Pyrrolidin-2-on, Piperidin-2-on und ε-Caprolactam. Besonders bevorzugte Monomere M3 sind 6-Aminohexansäure, Pyrrolidin-2-on, Piperidin-2-on und ε-Caprolactam, und speziell ε-Caprolactam.

Die Oligoamide der vorliegenden Erfindung sind vorzugsweise erhältlich durch Umsetzung von Monomeren umfassend wenigstens eine Aminoverbindung, die 2 primäre Aminogruppen aufweist, und wenigstens eine amidbildenden Verbindung, die unter Dicarbonsäuren, deren amidbildenden Derivaten und Lactamen ausgewählt ist.

Gemäß einer bevorzugten Ausführungsform wird die wenigstens eine Aminoverbindung mit 2 primären Aminogruppen ausgewählt aus Monomeren M1 und besonders bevorzugt unter Diaminen der Formel V1, und diese wird umgesetzt mit wenigstens einer Dicarbonsäure, vorzugsweise ausgewählt unter Dicarbonsäuren der Formel V2 oder einem amidbildenden Derivat davon. Bei dieser Ausführungsform wird die wenigstens eine Aminoverbindung, bezogen auf 1 Mol der wenigstens einen Dicarbonsäure, in der Regel in einer Menge von über 1 Mol, vorzugsweise von über 1,1 Mol, insbesondere von über 1,25 Mol und besonders bevorzugt von über 2 Mol eingesetzt.

Die Umsetzungen gemäß der vorstehenden bevorzugten Ausführungsform werden vorzugsweise mit einer oder zwei verschiedenen und besonders bevorzugt mit einer Dicarbonsäure oder einem amidbildenden Derivat davon durchgeführt. Falls die Umsetzungen mit zwei verschiedenen Dicarbonsäuren oder amidbildenden Derivaten davon durchgeführt werden, liegt deren Molverhältnis in der Regel im Bereich von 20:1 bis 1:1, vorzugsweise im Bereich von 15:1 bis 1:1 und insbesondere im Bereich von 10:1 bis 1:1.

In den Umsetzungen gemäß der vorstehenden bevorzugten Ausführungsform werden die Dicarbonsäuren vorzugsweise ausgewählt aus Adipinsäure, einem amidbildenden Adipinsäurederivat und Gemischen davon mit einer weiteren davon verschiedenen Dicarbonsäure V2 oder deren amidbildendem Derivat.

Gemäß einer weiteren bevorzugten Ausführungsform wird die wenigstens eine Aminoverbindung mit 2 primären Aminogruppen ausgewählt aus Monomeren M1 und besonders bevorzugt unter Diaminen der Formel V1, umgesetzt mit wenigstens einer amidbildenden Verbindung ausgewählt aus Monomeren M3, insbesondere aus Lactamen aliphatischer ω-Aminocarbonsäuren mit 4, 5 oder 6 Kohlenstoffatomen, und deren Mischungen mit Monomeren M2. Bei dieser Ausführungsform wird die wenigstens eine amidbildende Verbindung, bezogen auf 1 Mol der wenigstens einen Aminoverbindung, vorzugsweise in einer Menge von über 3 Mol, insbesondere von über 6 Mol und besonders bevorzugt von über 12 Mol eingesetzt.

Die Monomere M3 werden bevorzugt ausgewählt aus den Lactamen aliphatischer ω-(C₄-C₆)-Aminocarbonsäuren und deren Mischungen mit einer oder mehreren Dicarbonsäuren oder deren amidbildenden Derivaten. Insbesondere ist das wenigstens eine Monomer M3 ε-Caprolactam. Falls die Umsetzungen gemäß der vorstehenden bevorzugten Ausführungsform mit einem Lactam und einer oder mehreren Dicarbonsäuren oder deren amidbildenden Derivaten durchgeführt werden, liegt das Molverhältnis von Lactam zu Dicarbonsäuren oder Dicarbonsäurederivaten in der Regel im Bereich von 20:1 bis 1:10, vorzugsweise im Bereich von 15:1 bis 1:5 und insbesondere im Bereich von 10:1 bis 1:2.

In den beiden vorstehenden bevorzugten Ausführungsformen haben die Begriffe Monomer M1, Diamin der Formel V1, amidbildendes Derivat einer Dicarbonsäure, Monomer M2, Monomer M3 und Lactam die zuvor definierten Bedeutungen und insbesondere die als bevorzugt genannten Bedeutungen.

Die Umsetzungen gemäß der beiden vorstehenden bevorzugten Ausführungsformen werden vorzugsweise durchgeführt mit zwei oder mehreren verschiedenen, insbesondere zwei verschiedenen Aminoverbindungen mit 2 primären Aminogruppen. In diesen Fällen wird die zweite und alle weiteren Aminoverbindungen mit 2 primären Aminogruppen bevorzugt ausgewählt aus Monomeren M1. In diesem Zusammenhang sind insbesondere solche Monomere M1 bevorzugt, die den Diaminen der Formel V1 entsprechen, wobei der Rest A vorzugsweise ausgewählt wird aus C₂-C₈-Alkandiyl, wie 1,4-Butandiyl, 1,5-Heptandiyl, 1,6-Hexandiyl oder 1,7-Heptandiyl, [(C₂-C₆)-Alkandiyl-NH]ₒ-(C₃-C₆)-alkandiyl mit voneinander unabhängig gewählten Alkandiyleinheiten und o = 1, 2 oder 3, wie N,N'-Bis-(3-Aminopropyl)-ethylendiamin, und (C₂-C₆)-Alkandiyl-O-[(C₂-C₆)-Alkandiyl-O]ᵣ-(C₂-C₆)-Alkandiyl mit r = 1, 2, 3 oder 4, wie 4,9-Dioxadodecan-1,12-diamin oder 4,7,10-Trioxatridecan-1,13-diamin. Falls die Umsetzungen mit zwei verschiedenen Aminoverbindungen mit 2 primären Aminogruppen durchgeführt werden, liegt das Molverhältnis der beiden Aminoverbindungen in der Regel im Bereich von 20:1 bis 1:1, vorzugsweise im Bereich von 15:1 bis 1:1 und insbesondere im Bereich von 10:1 bis 1:1. Falls die Umsetzungen mit mehr als zwei Aminoverbindungen mit 2 primären Aminogruppen durchgeführt werden, liegt das Molverhältnis einer Aminoverbindung zur Summe aller übrigen Aminoverbindungen in der Regel im Bereich von 1:30 bis 1:1, vorzugsweise im Bereich von 1:20 bis 1:1 und insbesondere im Bereich von 1:15 bis 1:2.

In den Umsetzungen gemäß der beiden vorstehenden bevorzugten Ausführungsformen sind die Aminoverbindungen mit 2 primären Aminogruppen vorzugsweise ausgewählt unter 1,6-Diaminohexan und Gemischen davon mit mindestens einem weiteren, davon verschiedenen Diamin V1. Insbesondere bevorzugt sind die Aminoverbindungen mit 2 primären Aminogruppen ausgewählt unter 1,6-Diaminohexan und Gemischen davon mit einem weiteren, davon verschiedenen Diamin V1.

Die Umsetzungen gemäß der beiden vorstehenden bevorzugten Ausführungsformen können zudem in Gegenwart mindestens eines Triamins mit drei primären Aminogruppen durchgeführt werden. Bevorzugte Triamine werde ausgewählt aus Verbindungen der Formeln V3 und V4,

N-(V-NH₂)₃ (V3),

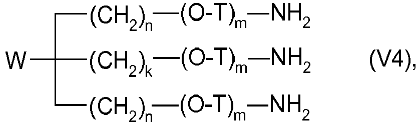

in denen V für einen bivalenten aliphatischen Rest und insbesondere für C₂-C₁₀-Alkandiyl steht, W für Wasserstoff oder einen aliphatischen Rest und insbesondere für Wasserstoff oder C₁-C₆-Alkyl steht, T für C₂-C₄-Alkandiyl, insbesondere für 1,2-Ethandiyl, 1,2-Propandiyl, 1,3-Propandiyl, 1,2-Butandiyl, 1,3-Butandiyl, 1,4-Butandiyl oder 2-Methyl-1,2-propandiyl und speziell für 1,2-Ethandiyl oder 1,2-Propandiyl steht, n und k unabhängig voneinander für 0, 1, 2, 3 oder 4 und insbesondere für 0 oder 1 stehen, und m für eine ganze Zahl im Bereich von 1 bis 20 und insbesondere von 3 bis 8 steht. Falls die Umsetzungen in Gegenwart mindestens eines Triamins mit drei primären Aminogruppen durchgeführt werden, liegt das Molverhältnis des mindestens eines Triamins zur mindestens einen Aminoverbindung mit zwei primären Aminogruppen in der Regel im Bereich von 1:1 bis 1:50, vorzugsweise im Bereich von 1:3 bis 1:30 und insbesondere im Bereich von 1:10 bis 1:25. Sofern mindestens ein Triamin mit drei primären Aminogruppen in den erfindungsgemäßen Umsetzungen zum Einsatz kommt, wird vorzugsweise nur ein solches Triamin in Kombination mit einer oder zwei, insbesondere einer Aminoverbindung mit 2 primären Aminogruppen verwendet.

Die Umsetzungen zu den Oligoamiden der vorliegenden Erfindung können in Analogie zu bekannten Verfahren des Standes der Technik durch Polykondensation der bivalenten Monomere erfolgen, wie beispielsweise in "Technische Polymere, Kapitel 4: Polyamide", Hrsg. L. Bottenbruch und R. Binsack, 1998, Hanser (München, Wien) beschrieben. Die Reaktionsbedingungen hängen naturgemäß von der Art und Funktionalität der verwendeten Monomere ab.

Ein geeignetes Verfahren zur Herstellung der erfindungsgemäßen Oligoamide stellt die thermische Polykondensation dar. Dabei wird ein Monomerengemisch, das vorzugsweise Dicarbonsäuren und Diamine umfasst, bei vergleichsweise hohen Temperaturen, etwa im Bereich von 180 °C bis 350 °C, insbesondere von 220 °C bis 300 °C und in der Regel erhöhten Drücken von 0,8 bar bis 30 bar, insbesondere 5 bar bis 20 bar, zur Reaktion gebracht. Die Umsetzung kann in Substanz, in Lösung oder in Suspension erfolgen.

Vorzugsweise führt man die Umsetzung in einem für die Reaktion geeigneten Lösungsmittel durch. Im Falle der Dicarbonsäuren und Diamine ist insbesondere Wasser als Lösungsmittel geeignet. Dabei liegt der Wasseranteil im Reaktionsgemisch üblicherweise bei 20 Massenprozent bis 80 Massenprozent, insbesondere bei 30 Massenprozent bis 60 Massenprozent bezüglich der Monomereinwaage. Wird für die Umsetzung ein hoher Wasseranteil verwendet, der gegebenenfalls auch über den zuvor angegebenen oberen Bereichsgrenzen liegen kann, können die Oligoamide in wässriger Dispersion vorliegend erhalten werden. Gewünschtenfalls kann eine solche Primärdispersion direkt zur Herstellung von Wasch-, Waschzusatz-, Wäschevorbehandlungs-oder Reinigungsmitteln eingesetzt werden.

Umfasst das Monomerengemisch Lactame und Diamine, erfolgt die Herstellung der erfindungsgemäßen Oligoamide vorzugsweise mittels hydrolytischer Polykondensation, die ebenfalls vorzugsweise in einem Temperaturbereich von 180 °C bis 350 °C, insbesondere von 220 °C bis 300 °C und Drücken von 0,8 bar bis 30 bar, insbesondere 5 bar bis 20 bar durchgeführt wird. Dabei wird ein vergleichsweise kleiner Wasseranteil von 1 Massenprozent bis 30 Massenprozent, insbesondere 3 Massenprozent bis 12 Massenprozent bezüglicher der Monomereinwaage verwendet, in dem das Lactam in der Regel in dispergierter Form vorliegt. Alternativ können Monomerengemische, die Lactame umfassen, durch alkalische Polymerisation unter Wasserausschluss bei in der Regel etwas niedrigeren Temperaturen zu den erfindungsgemäßen Oligoamiden umgesetzt werden.

Werden Monomerkombinationen verwendet, die amidbildende Derivate von Diaminen oder Dicarbonsäuren umfassen, wie etwa Diisocyanate und Dicarbonsäuren, Diamine und Dicarbonsäuredichloride oder Diamine und Dinitrile, wird die Polykondensationsreaktion vorzugsweise in Lösung und gegebenenfalls in Gegenwart eines Katalysators durchgeführt.

Wenn die so hergestellten Produkte nicht direkt zu Wasch-, Waschzusatz-, Wäschevorbehandlungs- oder Reinigungsmitteln weiterverarbeitet werden sollen, erfolgt die Aufarbeitung der bei den vorgenannten Verfahren erhaltenen Rohprodukte üblicherweise durch Trocknen und anschließendem Vermahlen zu einem Pulver oder durch Lösen, vorzugsweise in einem mäßig polaren organischen Lösungsmittel, insbesondere ausgewählt unter Phenolen, Kresolen und Benzylalkohol, nachfolgendem Ausfällen durch sehr polare Lösungsmittel, wie Methanol, Wasser oder Aceton, und anschließendem Dispergieren in Wasser. Die so erhaltenen Oligoamide in Form eines Pulvers oder einer wässrigen Dispersion können zur Herstellung von Wasch-, Waschzusatz-, Wäschevorbehandlungs- oder Reinigungsmitteln eingesetzt werden.

Die Oligoamide im Sinne der vorliegenden Erfindung sind wasserlöslich, wasserdispergierbar oder wasserunlöslich, wobei für den Einsatz in Wasch-, Waschzusatz-, Wäschevorbehandlungs- oder Reinigungsmitteln die wasserunlöslichen bevorzugt sind. Auch der gemeinsame Einsatz mehrerer derartiger Oligoamide ist möglich.

Die Oligoamidpartikel weisen vorzugsweise Teilchengrößen im Bereich von 1 nm bis 500 µm, insbesondere 5 nm bis 100 µm auf. Ihre mittlere Teilchengröße (Gewichtsmittel) liegt vorzugsweise im Bereich von 5 nm bis 100 µm, insbesondere 1 µm bis 50 µm. Der gewichtsmittlere Partikeldurchmesser der in wässriger Dispersion vorliegenden Oligoamide der Erfindung läßt sich mit aus dem Stand der Technik bekannten Verfahren, wie beispielsweise Siebanalyse oder Lichtstreuung, bestimmen und liegt typischerweise im Bereich von 0,01 µm bis 500 µm, vorzugsweise im Bereich von 0,1 µm bis 250 µm und insbesondere im Bereich von 0,2 µm bis 200 µm.

Die in fester Form vorliegenden Oligoamide können gewünschtenfalls durch übliche Extrusions- oder Mahlvorgänge in Partikelform überführt werden. Die Partikel können rund oder beliebig unregelmäßig geformt sein. Dabei ist möglich, dass die Formen der Partikel von der Kugelform derart abweichen, dass sie in ihrer längsten räumlichen Dimension einen Durchmesser aufweisen, der deutlich, gegebenenfalls um bis zu mehreren Größenordnungen, größer ist als derjenige ihrer kürzesten räumlichen Dimension und besonders bevorzugt als diejenigen der beiden anderen räumlichen Dimensionen; bei der letztgenannten Ausgestaltung spricht man üblicherweise von Fasern. Insbesondere zum Einsatz in flüssigen Mitteln können die Partikel auch in Dispersionsform weiterverarbeitet werden.

Die aminoendgruppenreichen Oligoamide dieser Erfindung können im Rahmen eines manuellen oder maschinellen Wasch- beziehungsweise Reinigungsverfahrens der Waschlösung separat, beispielsweise als Bestandteil eines Waschzusatzmittels, zugesetzt werden. Die aminoendgruppenreichen Oligoamide dieser Erfindung werden vorzugsweise als Bestandteil eines Vorbehandlungsmittels in einem dem eigentlichen Waschvorgang vorgelagerten Schritt mit dem Textil in Kontakt gebracht oder werden weiterhin vorzugsweise als Bestandteil eines Wasch- oder Reinigungsmittels in die Wasch- oder Reinigungslösung eingebracht. Ein Gegenstand der Erfindung ist die Verwendung von Oligoamiden, die wenigstens 750 µmol/g basische Aminogruppen aufweisen, als Additive in Textilwaschmittelzusammensetzungen, wobei die Oligoamide im Wesentlichen aus den oben definierten Wiederholungseinheiten der Formeln la und/oder Ib und gegebenenfalls den oben definierten Verzweigungseinheiten der Formeln II und/oder II' aufgebaut sind. Auch ihr Einsatz in einem Wäschevorbehandlungsschritt ist möglich, wobei dann das oligoamidhaltige Vorbehandlungsmittel vorzugsweise nicht ausgewaschen wird, sondern auf dem anschließend zu waschenden Textil verbleibt und zusammen mit diesem in die Waschlauge gelangt.

Ein erfindungsgemäßes Mittel enthält vorzugsweise 0,1 Gew.-% bis 5 Gew.-%, des Oligoamids.

Ein weiterer Gegenstand der Erfindung ist ein Verfahren zum Waschen von gefärbten Textilien in tensidhaltigen wässrigen Lösungen, welches dadurch gekennzeichnet ist, dass man eine tensidhaltige wässrige Lösung einsetzt, die ein Oligoamid, das wenigstens 750 µmol/g basische Aminogruppen aufweist, enthält, wobei das Oligoamid im Wesentlichen aus den oben definierten Wiederholungseinheiten der Formeln la und/oder Ib und gegebenenfalls den oben definierten Verzweigungseinheiten der Formeln II und/oder II' aufgebaut ist. In einem solchen Verfahren ist es möglich, zusammen mit dem gefärbten Textil auch weiße beziehungsweise ungefärbte Textilien zu waschen, ohne dass das weiße beziehungsweise ungefärbte Textil angefärbt wird. Die Konzentration des Oligioamids in der tensidhaltigen wäßrige Lösung beträgt dabei vorzugsweise 0,025 g/l bis 5 g/l, insbesondere 0,2 g /l bis 2,5 g/l.

Ein erfindungsgemäßes Mittel kann neben dem genannten farbübertragungsinhibierenden Wirkstoff, d. h. dem Oligoamid, gewünschtenfalls noch zusätzlich einen bekannten Farbübertragungsinhibitor, diesen dann vorzugsweise in Mengen von 0,01 Gew.-% bis 5 Gew.-%, insbesondere 0,1 Gew.-% bis 1 Gew.-%, enthalten, der in einer bevorzugten Ausgestaltung der Erfindung ein Polymer aus Vinylpyrrolidon, Vinylimidazol, Vinylpyridin-N-Oxid oder ein Copolymer aus diesen ist. Brauchbar sind sowohl Polyvinylpyrrolidone mit Molgewichten von 15 000 bis 50 000 wie auch Polyvinylpyrrolidone mit Molgewichten über 1 000 000, insbesondere von 1 500 000 bis 4 000 000, N-Vinylimidazol/N-Vinylpyrrolidon-Copolymere, Polyvinyloxazolidone, Polyamin-N-Oxid-Polymere, Polyvinylalkohole und Copolymere auf Basis von Acrylamidoalkenylsulfonsäuren. Eingesetzt werden können aber auch enzymatische Systeme, umfassend eine Peroxidase und Wasserstoffperoxid beziehungsweise eine in Wasser Wasserstoffperoxid-liefernde Substanz. Der Zusatz einer Mediatorverbindung für die Peroxidase, zum Beispiel eines Acetosyringons, eines Phenolderivats oder eines Phenothiazins oder Phenoxazins, ist in diesem Fall bevorzugt, wobei noch zusätzlich obengenannte konventionelle polymere Farbübertragungsinhibitorwirkstoffe eingesetzt werden können. Polyvinylpyrrolidon weist zum Einsatz in erfindungsgemäßen Mitteln vorzugsweise eine durchschnittliche Molmasse im Bereich von 10 000 g/mol bis 60 000 g/mol, insbesondere im Bereich von 25 000 g/mol bis 50 000 g/mol auf. Unter den Copolymeren sind solche aus Vinylpyrrolidon und Vinylimidazol im Molverhältnis 5:1 bis 1:1 mit einer durchschnittlichen Molmasse im Bereich von 5 000 g/mol bis 50 000 g/mol, insbesondere 10 000 g/mol bis 20 000 g/mol bevorzugt.

Die erfindungsgemäßen Mittel, die fest oder flüssig sein können und insbesondere als pulverförmige Feststoffe, in nachverdichteter Teilchenform, als homogene Lösungen oder Suspensionen vorliegen können, können außer dem erfindungsgemäß eingesetzten Wirkstoff im Prinzip alle bekannten und in derartigen Mitteln üblichen Inhaltsstoffe enthalten. Die erfindungsgemäßen Mittel können insbesondere Buildersubstanzen, oberflächenaktive Tenside, Bleichmittel auf Basis organischer und/oder anorganischer Persauerstoffverbindungen, Bleichaktivatoren, wassermischbare organische Lösungsmittel, Enzyme, Sequestrierungsmittel, Elektrolyte, pH-Regulatoren und weitere Hilfsstoffe, wie optische Aufheller, Vergrauungsinhibitoren, Schaumregulatoren sowie Farb-und Duftstoffe enthalten. Dabei ist erfindungsgemäß auch möglich, das Oligoamid auf ein wasserunlösliches Tuch aufzubringen oder es, gegebenenfalls mit weiteren der üblichen Inhaltstoffe, in einen Beutel aus wasserunlöslichem aber wasserdurchlässigem Material einzubringen, oder aus dem Polymer, insbesondere wenn es in Faserform vorliegt, ein Tuch oder einen anderen Formkörper wie beispielsweise eine Kugel oder einen Würfel herzustellen, und es so als Additiv oder als Bestandteil eines Additivs im Wasch- oder Reinigungsvorgang einzusetzen. Alternativ zur letztgenannten Ausführungsform kann das Oligoamid oder ein dieses enthaltendes Mittel portionsweise verpackt in ein wasserlösliches Material, zum Beispiel eine Polyvinylalkohol-Folie, in den Wasch- oder Reinigungsprozess eingebracht werden.

Die erfindungsgemäßen Mittel können ein Tensid oder mehrere Tenside enthalten, wobei insbesondere anionische Tenside, nichtionische Tenside und deren Gemische, aber auch kationische, zwitterionische und amphotere Tenside in Frage kommen.

Geeignete nichtionische Tenside sind insbesondere Alkylglykoside und Ethoxylierungs-und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z. B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-)Fettalkohole mit 14 EO, 16 EO, 20 EO, 25 EO, 30 EO oder 40 EO. Insbesondere in Mitteln für den Einsatz in maschinellen Verfahren werden üblicherweise extrem schaumarme Verbindungen eingesetzt. Hierzu zählen vorzugsweise C₁₂-C₁₈-Alkylpoly-ethylenglykol-polypropylenglykolether mit jeweils bis zu 8 Mol Ethylenoxid- und Propylenoxideinheiten im Molekül. Man kann aber auch andere bekannt schaumarme nichtionische Tenside verwenden, wie zum Beispiel C₁₂-C₁₈-Alkylpolyethylenglykol-polybutylenglykolether mit jeweils bis zu 8 Mol Ethylenoxid- und Butylenoxideinheiten im Molekül sowie endgruppenverschlossene Alkylpolyalkylenglykolmischether. Besonders bevorzugt sind auch die hydroxylgruppenhaltigen alkoxylierten Alkohole, wie sie in der europäischen Patentanmeldung EP 0 300 305 beschrieben sind, sogenannte Hydroxymischether. Zu den nichtionischen Tensiden zählen auch Alkylglykoside der allgemeinen Formel RO(G)ₓ, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl - die als analytisch zu bestimmende Größe auch gebrochene Werte annehmen kann - zwischen 1 und 10; vorzugsweise liegt x bei 1,2 bis 1,4. Ebenfalls geeignet sind Polyhydroxyfettsäureamide der nachstehend wiedergegebenen Formel,

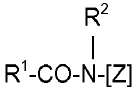

in der R¹CO für einen aliphatischen Acylrest mit 6 bis 22 Kohlenstoffatomen, R² für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht.

Vorzugsweise leiten sich die Polyhydroxyfettsäureamide von reduzierenden Zuckern mit 5 oder 6 Kohlenstoffatomen, insbesondere von der Glucose ab. Zur Gruppe der Polyhydroxyfettsäureamide gehören auch Verbindungen der nachstehend wiedergegebenen Formel,

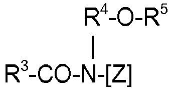

in der R³ für einen linearen oder verzweigten Alkyl- oder Alkenylrest mit 7 bis 12 Kohlenstoffatomen, R⁴ für einen linearen, verzweigten oder cyclischen Alkylenrest oder einen Arylenrest mit 2 bis 8 Kohlenstoffatomen und R⁵ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z] für einen linearen Polyhydroxyalkylrest, dessen Alkylkette mit mindestens zwei Hydroxylgruppen substituiert ist, oder alkoxylierte, vorzugsweise ethoxylierte oder propoxylierte Derivate dieses Restes steht. [Z] wird auch hier vorzugsweise durch reduktive Aminierung eines Zuckers wie Glucose, Fructose, Maltose, Lactose, Galactose, Mannose oder Xylose erhalten. Die N-Alkoxy- oder N-Aryloxy-substituierten Verbindungen können dann beispielsweise durch Umsetzung mit Fettsäuremethylestern in Gegenwart eines Alkoxids als Katalysator in die gewünschten Polyhydroxyfettsäureamide überführt werden. Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester. Auch nichtionische Tenside vom Typ der Aminoxide, beispielsweise N-Kokosalkyl-N,N-dimethyl-aminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon. Als weitere Tenside kommen sogenannte Gemini-Tenside in Betracht. Hierunter werden im Allgemeinen solche Verbindungen verstanden, die zwei hydrophile Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, dass die hydrophilen Gruppen einen ausreichenden Abstand haben, damit sie unabhängig voneinander agieren können. Derartige Tenside zeichnen sich im Allgemeinen durch eine ungewöhnlich geringe kritische Micellkonzentration und die Fähigkeit, die Oberflächenspannung des Wassers stark zu reduzieren, aus. In Ausnahmefällen werden unter dem Ausdruck Gemini-Tenside nicht nur derartig "dimere", sondern auch entsprechend "trimere" Tenside verstanden. Geeignete Gemini-Tenside sind beispielsweise sulfatierte Hydroxymischether oder Dimeralkohol-bis- und Trimeralkohol-tris-sulfate und -ethersulfate. Endgruppenverschlossene dimere und trimere Mischether zeichnen sich insbesondere durch ihre Bi- und Multifunktionalität aus. So besitzen die genannten endgruppenverschlossenen Tenside gute Netzeigenschaften und sind dabei schaumarm, so dass sie sich insbesondere für den Einsatz in maschinellen Wasch- oder Reinigungsverfahren eignen. Eingesetzt werden können aber auch Gemini-Polyhydroxyfettsäureamide oder Poly-Polyhydroxyfettsäureamide. Geeignet sind auch die Schwefelsäuremonoester der mit 1 bis 6 Mol Ethylenoxid ethoxylierten geradkettigen oder verzweigten C₇-C₂₁-Alkohole, wie 2-Methylverzweigte C₉-C₁₁-Alkohole mit im Durchschnitt 3,5 Mol Ethylenoxid (EO) oder C₁₂-C₁₈-Fettalkohole mit 1 bis 4 EO. Zu den bevorzugten Aniontensiden gehören auch die Salze der Alkylsulfobernsteinsäure, die auch als Sulfosuccinate oder als Sulfobernsteinsäureester bezeichnet werden, und die Monoester und/oder Diester der Sulfobernsteinsäure mit Alkoholen, vorzugsweise Fettalkoholen und insbesondere ethoxylierten Fettalkoholen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen. Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen. Als weitere anionische Tenside kommen Fettsäure-Derivate von Aminosäuren, beispielsweise von N-Methyltaurin (Tauride) und/oder von N-Methylglycin (Sarkoside) in Betracht. Insbesondere bevorzugt sind dabei die Sarkoside beziehungsweise die Sarkosinate und hier vor allem Sarkosinate von höheren und gegebenenfalls einfach oder mehrfach ungesättigten Fettsäuren wie Oleylsarkosinat. Als weitere anionische Tenside kommen insbesondere Seifen in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, zum Beispiel Kokos-, Palmkern- oder Talgfettsäuren, abgeleitete Seifengemische. Zusammen mit diesen Seifen oder als Ersatzmittel für Seifen können auch die bekannten Alkenylbernsteinsäuresalze eingesetzt werden.

Die anionischen Tenside, einschließlich der Seifen, können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Geeignete kationische Tenside sind beispielsweise Mono- und Di-(C₇-C₂₅-alkyl)-dimethylammoniumverbindungen und Esterquats, insbesondere quaternäre veresterte Mono-, Di- und Trialkanolamine, die mit C₈-C₂₂-Carbonsäuren verestert sind.

Geeignete amphotere Tenside sind zum Beispiel Alkylbetaine, Alkylamidbetaine, Aminopropionate, Aminoglycinate und amphotere Imidazoliumverbindungen.

Tenside sind in erfindungsgemäßen Waschmitteln in Mengenanteilen von vorzugsweise 5 Gew.-% bis 50 Gew.-%, insbesondere von 8 Gew.-% bis 30 Gew.-%, enthalten.

Ein erfindungsgemäßes Mittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)Carbonsäuren, insbesondere die durch Oxidation von Polysacchariden beziehungsweise Dextrinen zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im Allgemeinen zwischen 3 000 und 200 000, die der Copolymeren zwischen 2 000 und 200 000, vorzugsweise 30 000 bis 120 000, jeweils bezogen auf freie Säure. Ein besonders bevorzugtes Acrylsäure-Maleinsäure-Copolymer weist eine relative Molekülmasse von 30 000 bis 100 000 auf. Handelsübliche Produkte sind zum Beispiel Sokalan® CP 5, CP 10 und PA 30 der Firma BASF. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einen veresterten Vinylalkohol oder ein Kohlenhydrat enthalten, wobei sich das erste saure Monomer von einer monoethylenisch ungesättigten C₃-C₈-Carbonsäure und vorzugsweise von einer C₃-C₄-Monocarbonsäure, insbesondere von (Meth-)Acrylsäure, ableitet und das zweite saure Monomer ein Derivat einer C₄-C₈-Dicarbonsäure ist, wobei Maleinsäure besonders bevorzugt ist, und/oder ein Derivat einer Allylsulfonsäure, die in 2-Stellung mit einem Alkyl- oder Arylrest substituiert ist. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können in den Mitteln gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere Alkalisilikate, Alkalicarbonate und Alkaliphosphate, die in Form ihrer alkalischen, neutralen oder sauren Natrium- oder Kaliumsalze vorliegen können, in Betracht. Beispiele hierfür sind Trinatriumphosphat, Tetranatriumdiphosphat, Dinatriumdihydrogendiphosphat, Pentanatriumtriphosphat, sogenanntes Natriumhexametaphosphat, oligomeres Trinatriumphosphat mit Oligomerisierungsgraden von 5 bis 1000, insbesondere 5 bis 50, sowie die entsprechenden Kaliumsalze beziehungsweise Gemische aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, allein oder in Mischungen, beispielsweise in Form eines Co-Kristallisats aus den Zeolithen A und X (Vegobond® AX, ein Handelsprodukt der Condea Augusta S.p.A.), bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ ·y H₂O eingesetzt, in der x, das sogenannte Modul, eine Zahl von 1,9 bis 22, insbesondere 1,9 bis 4 und y eine Zahl von 0 bis 33 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl ß- als auch δ-Natriumdisilikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es aus Sand und Soda hergestellt werden kann. Kristalline Natriumsilikate mit einem Modul im Bereich von 1,9 bis 3,5 werden in einer weiteren bevorzugten Ausführungsform erfindungsgemäßer Mittel eingesetzt. Kristalline schichtförmige Silikate der oben angegebenen Formel (I) werden von der Fa. Clariant GmbH unter dem Handelsnamen Na-SKS vertrieben, z. B. Na-SKS-1 (Na₂Si₂₂O₄₅·xH₂O, Kenyait), Na-SKS-2 (Na₂Si₁₄O₂₉·xH₂O, Magadiit), Na-SKS-3 (Na₂Si₈O₁₇·xH₂O) oder Na-SKS-4 (Na₂Si₄O₉·xH₂O, Makatit). Von diesen eignen sich vor allem Na-SKS-5 (α-Na₂Si₂O₅), Na-SKS-7 (ß-Na₂Si₂O₅, Natrosilit), Na-SKS-9 (NaHSi₂O₅·3H₂O), Na-SKS-10 (NaHSi₂O₅·3H₂O, Kanemit), Na-SKS-11 (t-Na₂Si₂O₅) und Na-SKS-13 (NaHSi₂O₅), insbesondere aber Na-SKS-6 (δ-Na₂Si₂O₅). In einer bevorzugten Ausgestaltung erfindungsgemäßer Mittel setzt man ein granulares Compound aus kristallinem Schichtsilikat und Citrat, aus kristallinem Schichtsilikat und oben genannter (co-)polymerer Polycarbonsäure, oder aus Alkalisilikat und Alkalicarbonat ein, wie es beispielsweise unter dem Namen Nabion® 15 im Handel erhältlich ist.

Buildersubstanzen sind in den erfindungsgemäßen Mitteln vorzugsweise in Mengen bis zu 75 Gew.-%, insbesondere 5 Gew.-% bis 50 Gew.-% enthalten.

Als für den Einsatz in erfindungsgemäßen Mitteln geeignete Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, zu denen Perborat, Percarbonat, Persilikat und/oder Persulfat wie Caroat gehören, in Betracht. Sofern feste Persauerstoffverbindungen eingesetzt werden sollen, können diese in Form von Pulvern oder Granulaten verwendet werden, die auch in im Prinzip bekannter Weise umhüllt sein können. Falls ein erfindungsgemäßes Mittel Persauerstoffverbindungen enthält, sind diese in Mengen von vorzugsweise bis zu 50 Gew.-%, insbesondere von 5 Gew.-% bis 30 Gew.-%, vorhanden. Der Zusatz geringer Mengen bekannter Bleichmittelstabilisatoren wie beispielsweise von Phosphonaten, Boraten beziehungsweise Metaboraten und Metasilikaten sowie Magnesiumsalzen wie Magnesiumsulfat kann zweckdienlich sein.

Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran und Enolester sowie acetyliertes Sorbitol und Mannitol beziehungsweise deren beschriebene Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam. Die hydrophil substituierten Acylacetale und die Acyllactame werden ebenfalls bevorzugt eingesetzt. Auch Kombinationen konventioneller Bleichaktivatoren können eingesetzt werden. Derartige Bleichaktivatoren können, insbesondere bei Anwesenheit obengenannter Wasserstoffperoxid-liefernder Bleichmittel, im üblichen Mengenbereich, vorzugsweise in Mengen von 0,5 Gew.-% bis 10 Gew.-%, insbesondere 1 Gew.-% bis 8 Gew.-%, bezogen auf gesamtes Mittel, enthalten sein, fehlen bei Einsatz von Percarbonsäure als alleinigem Bleichmittel jedoch vorzugsweise ganz.

Zusätzlich zu den konventionellen Bleichaktivatoren oder an deren Stelle können auch Sulfonimine und/oder bleichverstärkende Übergangsmetallsalze beziehungsweise Übergangsmetallkomplexe als sogenannte Bleichkatalysatoren enthalten sein.

Als in den Mitteln verwendbare Enzyme kommen solche aus der Klasse der Amylasen, Proteasen, Lipasen, Cutinasen, Pullulanasen, Hemicellulasen, Cellulasen, Oxidasen, Laccasen und Peroxidasen sowie deren Gemische in Frage. Besonders geeignet sind aus Pilzen oder Bakterien, wie Bacillus subtilis, Bacillus licheniformis, Bacillus lentus, Streptomyces griseus, Humicola lanuginosa, Humicola insolens, Pseudomonas pseudoalcaligenes, Pseudomonas cepacia oder Coprinus cinereus gewonnene enzymatische Wirkstoffe. Die Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch- oder Reinigungsmitteln vorzugsweise in Mengen bis zu 5 Gew.-%, insbesondere von 0,2 Gew.-% bis 4 Gew.-%, enthalten. Falls das erfindungsgemäße Mittel Protease enthält, weist es vorzugsweise eine proteolytische Aktivität im Bereich von etwa 100 PE/g bis etwa 10 000 PE/g, insbesondere 300 PE/g bis 8000 PE/g auf. Falls mehrere Enzyme in dem erfindungsgemäßen Mittel eingesetzt werden sollen, kann dies durch Einarbeitung der zwei oder mehreren separaten beziehungsweise in bekannter Weise separat konfektionierten Enzyme oder durch zwei oder mehrere gemeinsam in einem Granulat konfektionierte Enzyme durchgeführt werden.

Zu den in den erfindungsgemäßen Mitteln, insbesondere wenn sie in flüssiger oder pastöser Form vorliegen, neben Wasser verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Mitteln vorzugsweise in Mengen nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system-und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln in Mengen von vorzugsweise nicht über 20 Gew.-%, insbesondere von 1,2 Gew.-% bis 17 Gew.-%, enthalten.

Vergrauungsinhibitoren haben die Aufgabe, den von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Erfindungsgemäße Textilwaschmittel können als optische Aufheller beispielsweise Derivate der Diaminostilbendisulfonsäure beziehungsweise deren Alkalimetallsalze enthalten, obgleich sie für den Einsatz als Colorwaschmittel vorzugsweise frei von optischen Aufhellern sind. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Verfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

Die Herstellung erfindungsgemäßer fester Mittel bietet keine Schwierigkeiten und kann auf bekannte Weise, zum Beispiel durch Sprühtrocknen oder Granulation, erfolgen, wobei Enzyme und eventuelle weitere thermisch empfindliche Inhaltsstoffe wie zum Beispiel Bleichmittel gegebenenfalls später separat zugesetzt werden. Zur Herstellung erfindungsgemäßer Mittel mit erhöhtem Schüttgewicht, insbesondere im Bereich von 650 g/l bis 950 g/l, ist ein einen Extrusionsschritt aufweisendes Verfahren bevorzugt.

Zur Herstellung von erfindungsgemäßen Mitteln in Tablettenform, die einphasig oder mehrphasig, einfarbig oder mehrfarbig und insbesondere aus einer Schicht oder aus mehreren, insbesondere aus zwei Schichten bestehen können, geht man vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen, mit Presskräften im Bereich von etwa 50 bis 100 kN, vorzugsweise bei 60 bis 70 kN verpresst. Insbesondere bei mehrschichtigen Tabletten kann es von Vorteil sein, wenn mindestens eine Schicht vorverpresst wird. Dies wird vorzugsweise bei Presskräften zwischen 5 und 20 kN, insbesondere bei 10 bis 15 kN durchgeführt. Man erhält so problemlos bruchfeste und dennoch unter Anwendungsbedingungen ausreichend schnell lösliche Tabletten mit Bruch- und Biegefestigkeiten von normalerweise 100 bis 200 N, bevorzugt jedoch über 150 N. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung beispielsweise der Geschirrspülmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26 x 36 mm oder von 24 x 38 mm auf.

Flüssige beziehungsweise pastöse erfindungsgemäße Mittel in Form von übliche Lösungsmittel, insbesondere Wasser, enthaltenden Lösungen werden in der Regel durch einfaches Mischen der Inhaltsstoffe, die in Substanz oder als Lösung in einen automatischen Mischer gegeben werden können, hergestellt.

### Beispiele

### Beispiel 1: Methoden zur Ermittlung analytischer Kennzahlen

### a) Bestimmung des Anteils an basischen Aminogruppen in den Oligoamiden (AEG)

Die genau eingewogene Probe wurde in einem Phenol/Methanol-Gemisch gelöst und mit Salzsäurelösung (0,02 N) potentiometrisch titriert. Aus dem Verbrauch bis zum Wendepunkt der Titrationskurve und einem entsprechenden Blindwert des reinen Lösemittels wurde die Anzahl der titrierbaren Aminogruppen berechnet.

### b) Bestimmung der Viskositätszahl (VZ):

Die Bestimmung erfolgte an 0,5 Gew.-% Polymerlösungen in konzentrierter Schwefelsäure (96 %ig) nach DIN 53 727 bei 25 °C.

### c) Bestimmung des Anteils an Carboxylendgruppen in den Polyamiden (CEG)

In Abhängigkeit von der zu erwartenden Menge an Carboxylendgruppen wurden Proben von 0,8 bis 2,0 g Polyamid jeweils in 25 ml Benzylalkohol unter Rückfluss aufgelöst. Nach dem vollständigen Lösen der Proben wurde jeweils 0,5 ml Kresol-Rot zugegeben. Per visueller Titration mit einer Lösung von Kaliumhydroxid in Ethanol (0,5 N) wurde die Menge an terminalen Carboxylgruppen bestimmt, wobei zur Endpunktbestimmung der Farbumschlag von gelb nach violett diente. Zur Korrektur der ermittelten Werte wurde ein Blindwert analog zu obiger Vorgehensweise bestimmt, mit dem Unterschied, dass keine Polyamidprobe zugesetzt wurde.

### Beispiel 2: Herstellung von Oligoamiden

### a) Vergleichspolymer V:

8,30 g wässrige Hexamethylendiamin-Lösung (70 Gew.-%) und 6,06 g Adipinsäure wurden in 10,0 g Wasser gelöst und in einem großen, dickwandigen Reagenzglas in einem Druckreaktor auf 280 °C unter 17 bar aufgeheizt. Der Druck und die Temperatur wurden für 1 Stunde gehalten und der Druck dann innerhalb von 45 Minuten auf Atmosphärendruck verringert. Unter kontinuierlichem Stickstoffstrom wurde dann bei 280 °C die Nachkondensation für 2 Stunden durchgeführt und das Produkt nach Abkühlen entnommen, im Vakuum (100 mbar) bei 80 °C getrocknet und gemahlen.
AEG = 43 µmol/g

### b) Polymer A

400,0 g Caprolactam, 28,0 g wässrige Hexamethylendiamin-Lösung (71,4 Gew.-%) und 32,0 g Wasser wurden in einen Druckreaktor eingewogen. Der Kessel wurde mehrmals mit Stickstoff gespült, dann verschlossen und auf 270 °C Außentemperatur aufgeheizt (ca. 260 °C Innentemperatur). Die Reaktion wurde bei ca. 260 °C Innentemperatur und 16 bar für 15 Minuten gehalten und der Druck dann innerhalb einer Stunde auf Umgebungsdruck entspannt und anschließend 120 Minuten mit Stickstoffstrom-Spülung bei 260 °C Innentemperatur nachkondensiert. Schließlich wurde das Polymer durch Anlegen eines Stickstoff-Überdrucks aus dem Reaktor ausgefahren, nach Abkühlen getrocknet und in einer Laborzentrifugalmühle gemahlen.

Die erhaltenen Pulverpartikelgrößen lagen zwischen 5 µm und 300 µm, die mittlere Partikelgröße lag bei ca. 50 µm (visuelle Beurteilung im Lichtmikroskop).
AEG = 770 µmol/g
CEG = 10 µmol/g

### c) Polymer B

400,0 g Caprolactam, 84,0 g wässrige Hexamethylendiamin-Lösung (71,4 Gew.-%) und 16,0 g Wasser wurden in einen Druckreaktor eingewogen. Der Kessel wurde mehrmals mit Stickstoff gespült, dann verschlossen und auf 270 °C Außentemperatur aufgeheizt (ca. 260 °C Innentemperatur). Die Reaktion wurde bei ca. 260 °C Innentemperatur und 16 bar für 15 Minuten gehalten, der Druck dann innerhalb einer Stunde auf Umgebungsdruck entspannt und anschließend 120 Minuten mit Stickstoffstrom-Spülung bei 260 °C Innentemperatur nachkondensiert. Schließlich wurde das Polymer durch Anlegen eines Stickstoff-Überdrucks aus dem Reaktor ausgefahren, nach Abkühlen getrocknet und in einer Laborzentrifugalmühle gemahlen.

Die erhaltenen Pulverpartikelgrößen lagen zwischen 50 und 1000 µm, die mittlere Partikelgröße lag bei ca. 200 µm (visuelle Beurteilung im Lichtmikroskop).
AEG = 1700 µmol/g
CEG = 10 µmol/g

### d) Polymer C

2,08 g wässrige Hexamethylendiamin-Lösung (70 Gew.-%), 5,04 g Adipinsäure und 8,25 g 4,7,10-Trioxatridecan-1,13-diamin wurden in 10,0 g Wasser gelöst und in einem großen, dickwandigen Reagenzglas in einem Druckreaktor auf 280 °C unter 17 bar aufgeheizt. Der Druck und die Temperatur wurden für 1 Stunde gehalten und der Druck dann innerhalb von 45 Minuten auf Atmosphärendruck verringert. Unter kontinuierlichem Stickstoffstrom wurde dann bei 280 °C die Nachkondensation für 2 Stunden durchgeführt und das Produkt nach dem Abkühlen entnommen, im Vakuum (100 mbar) bei 80 °C getrocknet und gemahlen.
VZ = 10 ml/g
AEG = 1360 µmol/g
CEG = 20 µmol/g

### e) Polymer D

4,98 g wässrige Hexamethylendiamin-Lösung (70 Gew.-%), 6,05 g Adipinsäure und 6,46 g Bis(hexamethylen)triamin wurden in 10,0 g Wasser gelöst und in einem großen, dickwandigen Reagenzglas in einem Druckreaktor auf 280 °C unter 17 bar aufgeheizt. Der Druck und die Temperatur wurden für 1 Stunde gehalten und der Druck dann innerhalb von 45 Minuten auf Atmosphärendruck verringert. Unter kontinuierlichem Stickstoffstrom wurde dann bei 280 °C die Nachkondensation für 2 Stunden durchgeführt und das Produkt nach dem Abkühlen entnommen, im Vakuum (100 mbar) bei 80 °C getrocknet und gemahlen.
VZ = 29 ml/g
AEG = 3090 µmol/g
CEG = 20 µmol/g

### f) Polymer E

6,64 g wässrige Hexamethylendiamin-Lösung (70 Gew.-%), 3,90 g Adipinsäure und 4,13 g Diethylentriamin wurden in 10,0 g Wasser gelöst und in einem großen, dickwandigen Reagenzglas in einem Druckreaktor auf 280 °C unter 17 bar aufgeheizt. Der Druck und die Temperatur wurden für 1 Stunde gehalten und der Druck dann innerhalb von 45 Minuten auf Atmosphärendruck verringert. Unter kontinuierlichem Stickstoffstrom wurde dann bei 280 °C die Nachkondensation für 2 Stunden durchgeführt und das Produkt nach dem Abkühlen entnommen, im Vakuum (100 mbar) bei 80 °C getrocknet und gemahlen.
VZ = 9 mL/g
AEG = 4880 µmol/g
CEG = 30 µmol/g

### g) Polymer F

6,64 g wässrige Hexamethylendiamin-Lösung (70 Gew.-%), 3,90 g Adipinsäure und 8,62 g Bis(hexamethylen)triamin wurden in 10,0 g Wasser gelöst und in einem großen, dickwandigen Reagenzglas in einem Druckreaktor auf 280 °C unter 17 bar aufgeheizt. Der Druck und die Temperatur wurden für 1 Stunde gehalten und der Druck dann innerhalb von 45 Minuten auf Atmosphärendruck verringert. Unter kontinuierlichem Stickstoffstrom wurde dann bei 280 °C die Nachkondensation für 2 Stunden durchgeführt und das Produkt nach dem Abkühlen entnommen, im Vakuum (100 mbar) bei 80 °C getrocknet und gemahlen.
VZ = 9 mL/g
AEG = 7190 µmol/g
CEG = 15 µmol/g

### h) Polymer G

90,53 g Caprolactam und 20,63 g Diethylentriamin wurden mit 160 g Wasser in einen Druckreaktor eingewogen. Der Kessel wurde mehrmals mit Stickstoff gespült, dann verschlossen und auf 280 °C Außentemperatur aufgeheizt (ca. 270 °C Innentemperatur). Die Reaktion wurde bei ca. 270 °C Innentemperatur und 16 bar für 15 Minuten gehalten und der Druck dann innerhalb einer Stunde auf Umgebungsdruck entspannt und anschließend 120 Minuten mit Stickstoffstrom-Spülung bei 270 °C Innentemperatur nachkondensiert. Schließlich wurde das Polymer durch Anlegen eines Stickstoff-Überdrucks aus dem Reaktor ausgefahren, nach Abkühlen getrocknet und gemahlen.
VZ = 16 mL/g
AEG = 5030 µmol/g
CEG = 40 µmol/g

### Beispiel 3: Farbübertragungsinhibierung

Aus einem farbübertragungsinhibitorfreien flüssigen Waschmittel W1 (5 g/l) wurde eine Waschlauge erzeugt, der die in der nachfolgenden Tabelle angegebenen Farbtextilien zugesetzt wurden und mit der weiße Textilstücke (6 cm x 16 cm) aus Baumwolle (Krefelder Standard) oder Polyamid (EMPA 406) bei 60 °C 30 Minuten lang behandelt wurden. Zum Vergleich wurden ansonsten gleiche Waschlaugen, die zusätzlich zum Mittel W1 eines der wie vorstehend beschrieben hergestellten Oligoamide enthielten (V, A oder B jeweils 5 g/l, D, E, F, oder G jeweils 2,5 g/l), unter den gleichen Bedingungen getestet. Das Anbluten der weißen Begleittextilien wurde gemäß der DIN EN ISO 105-A04 auf einer Skala von 1 (starkes Anfärben) bis 5 (kein Anfärben) bewertet. In der nachfolgenden Tabelle sind die Ergebnisse angegeben.

| Material | Farbtextil | W1 | + V | + A | + B | + D | + E | + F | + G |
|---|---|---|---|---|---|---|---|---|---|
| Baumwolle | 1 g AISE 41-31 | 4,2 | 4,1 | 4,7 | 4,9 | n.b. | 4,7 | 4,5 | 4,8 |
| Polyamid | 0,3 g EMPA 131 | 2,0 | 2,4 | 3,9 | 3,9 | 2,9 | 2,9 | 3,7 | 2,5 |
| Polyamid | 1 g AISE 41-30 | 3,5 | 3,7 | 3,9 | n.b. | 4,1 | n.b. | 4,5 | n.b. |
| Polyamid | 1 g AISE 41-31 | 2,6 | 2,6 | 3,1 | 4,1 | 3,4 | 3,5 | n.b. | 3,8 |

Man erkennt, dass im Vergleich zum Waschmittel ohne Zusatz der erfindungswesentlichen Oligoamide die weißen Textilien beim Waschen mit Oligoamidzusatz weniger angefärbt wurden.

## Patentansprüche

1. Wasch-, Waschzusatz-, Wäschevorbehandlungs- oder Reinigungsmittel, enthaltend einen Farbübertragungsinhibitor in Form eines Oligoamids, das wenigstens 750 µmol/g basische Aminogruppen aufweist, neben üblichen mit diesem Bestandteil verträglichen Inhaltsstoffen, wobei das Oligoamid im Wesentlichen aus Wiederholungseinheiten der Formeln la und/oder Ib und gegebenenfalls Verzweigungseinheiten der Formeln II und/oder II' aufgebaut sind, 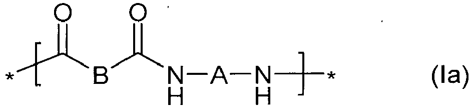 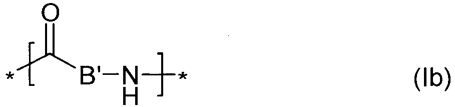 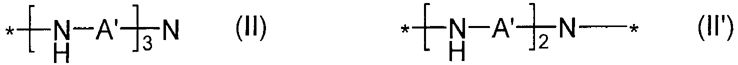 worin
A ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können, und Gruppen der Formel (A"-O)ₚ-A worin A" für C₂-C₄-Alkandiyl steht, und p für eine ganze Zahl im Bereich von 1 bis 20 steht, wobei die Wiederholungseinheiten A"-O gleich oder verschieden sein können;
A' ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können;
B ausgewählt wird unter einer kovalenten Bindung, Alkandiyl mit 1 bis 20 C-Atomen, worin 2 miteinander verknüpfte CH₂-Gruppen gemeinsam durch eine C₅-C₇-Cycloalkandiylgruppe ersetzt sein können und C₆-C₁₄-Arylendiyl, das unsubstituiert ist oder 1 oder 2 Substituenten aufweist, die unter C₁-C₄-Alkyl, C₁-C₄-Alkoxy und SO₃H ausgewählt sind, und
B' ausgewählt wird unter Alkandiylresten mit 4 bis 20 C-Atomen;
wobei das Mittel 0,05 bis 20 Gew.-% des Oligoamids enthält.

2. Mittel nach Anspruch 1, **dadurch gekennzeichnet, dass** es 0,1 Gew.-% bis 5 Gew.-%, des Oligoamids enthält.

3. Mittel nach Anspruch 1 oder 2, **dadurch gekennzeichnet, dass** es das Oligoamid aufgebracht auf ein wasserunlösliches Tuch enthält.

4. Verwendung von Oligoamiden, die wenigstens 750 µmol/g basische Aminogruppen aufweisen, als Additive in Textilwaschmittelzusammensetzungen, wobei die Oligoamide im Wesentlichen aus den in Anspruch 1 definierten Wiederholungseinheiten der Formeln la und/oder Ib und gegebenenfalls den in Anspruch 1 definierten Verzweigungseinheiten der Formeln II und/oder II' aufgebaut sind.

5. Verwendung von Oligoamiden, die wenigstens 750 µmol/g basische Aminogruppen aufweisen, zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen, oder zur Vermeidung der Veränderung des Farbeindrucks von Textilien bei deren Wäsche in insbesondere tensidhaltigen wässrigen Lösungen, wobei die Oligoamide im Wesentlichen aus den in Anspruch 1 definierten Wiederholungseinheiten der Formeln la und/oder Ib und gegebenenfalls den in Anspruch 1 definierten Verzweigungseinheiten der Formeln II und/oder II' aufgebaut sind.

6. Verfahren zum Waschen von gefärbten Textilien in tensidhaltigen wäßrigen Lösungen, **dadurch gekennzeichnet, dass** man eine tensidhaltige wässrige Lösung einsetzt, die ein Oligoamid, das wenigstens 750 µmol/g basische Aminogruppen aufweist, enthält, wobei das Oligoamid im Wesentlichen aus den in Anspruch 1 definierten Wiederholungseinheiten der Formeln la und/oder Ib und gegebenenfalls den in Anspruch 1 definierten Verzweigungseinheiten der Formeln II und/oder II' aufgebaut ist.

7. Mittel, Verwendung oder Verfahren nach einem der vorstehenden Ansprüche, **dadurch gekennzeichnet, dass** die Oligoamide erhältlich sind durch Umsetzung
a) wenigstens einer Aminoverbindung, die 2 primäre Aminogruppen aufweist, insbesondere ausgewählt aus Verbindungen der Formel V1
H₂N-A-NH₂ (V1)
worin A ausgewählt wird unter Alkandiylresten mit 2 bis 20 C-Atomen, in denen 1, 2, 3, 4 oder 5 nicht benachbarte CH₂-Gruppen durch eine entsprechende Anzahl NH-Gruppen ersetzt sein können, und/oder in denen 2 miteinander verknüpfte CH₂-Gruppen gemeinsam durch eine C₅-C₇-Cycloalkandiylgruppe ersetzt sein können, und Gruppen der Formel (A"-O)ₚ-A", worin A" für C₂-C₄-Alkandiyl steht und p für eine ganze Zahl im Bereich von 1 bis 20 steht, wobei die Wiederholungseinheiten A"-O gleich oder verscheiden sein können,
mit
b) wenigstens einer amidbildenden Verbindung, die unter Dicarbonsäuren, deren amidbildenden Derivaten und Lactamen ausgewählt ist.

8. Mittel, Verwendung oder Verfahren nach Anspruch 7, **dadurch gekennzeichnet, dass** die amidbildende Verbindung ausgewählt ist unter Dicarbonsäuren der Formel V2,
HOOC-B-COOH (V2)
und deren amidbildenden Derivaten, worin
B ausgewählt ist aus einer kovalenten Bindung,
Alkandiylresten mit 1 bis 20 C-Atomen, worin 2 miteinander verknüpfte CH₂-Gruppen gemeinsam durch eine C₅-C₇-Cycloalkandiylgruppe ersetzt sein können, und
Arylen, das unsubstituiert ist oder 1, 2 oder 3 Substituenten aufweist, die unter C₁-C₄-Alkyl, C₁-C₄-Alkoxy und SO₃H ausgewählt sind,
und worin B insbesondere für 1,4-Butandiyl steht.

9. Mittel, Verwendung oder Verfahren nach Anspruch 7, **dadurch gekennzeichnet, dass** die amidbildende Verbindung ausgewählt ist aus Lactamen und deren Mischungen mit Dicarbonsäuren und deren amidbildenden Derivaten und wobei das Lactam insbesondere Caprolactam ist.

10. Mittel, Verwendung oder Verfahren nach einem der vorhergehenden Ansprüche, wobei die Oligoamide wenigstens eines, insbesondere wenigstens 2, 3 oder 4 der folgenden Merkmale i) bis iv) aufweisen:
i) die Oligoamide sind wasserunlöslich und partikelförmig, wobei die Oligoamidpartikel Teilchengrößen im Bereich von 1 nm bis 500 µm, insbesondere 5 nm bis 100 µm aufweisen,
ii) die Oligoamide sind wasserunlöslich und partikelförmig, wobei die mittlere Teilchengröße (Gewichtsmittel) der Oligoamidpartikel im Bereich von 5 nm bis 100 µm, insbesondere 1 µm bis 50 µm liegt,
iii) die Oligoamide weisen weniger als 100 µmol/g Carboxylgruppen auf,
iv) die Oligoamide weisen ein zahlenmittleres Molekulargewicht im Bereich von 200 g/mol bis 5000 g/mol auf.

11. Oligoamide, die wenigstens 750 µmol/g basische Aminogruppen und ein zahlenmittleres Molekulargewicht im Bereich von 200 g/mol bis 5000 g/mol aufweisen, und die im Wesentlichen aus Wiederholungseinheiten der Formeln la und/oder Ib und gegebenenfalls Verzweigungseinheiten der Formeln II und/oder II' aufgebaut sind, 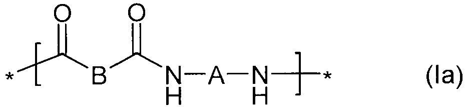 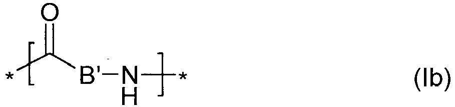 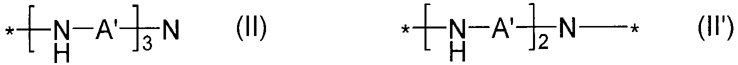 worin
A ausgewählt wird unter Alkandiylresten mit 2 bis 20 C-Atomen, worin 2 miteinander verknüpfte CH₂-Gruppen gemeinsam durch eine C₅-C₇-Cycloalkandiylgruppe ersetzt sein können, und Gruppen der Formel (A"-O)ₚ-A', worin A" für C₂-C₄-Alkandiyl steht, und p für eine ganze Zahl im Bereich von 1 bis 20 steht, wobei die Wiederholungseinheiten A"-O gleich oder verschieden sein können;
A' ausgewählt wird unter Alkandiylresten mit 2 bis 20 C-Atomen, worin 1, 2, 3, 4 oder 5 nicht benachbarte CH₂-Gruppen durch eine entsprechende Anzahl NH-Gruppen ersetzt sein können, und/oder worin 2 miteinander verknüpfte CH₂-Gruppen gemeinsam durch eine C₅-C₇-Cycloalkandiylgruppe ersetzt sein können;
B ausgewählt wird unter einer kovalenten Bindung, Alkandiylresten mit 1 bis 20 C-Atomen, worin 2 miteinander verknüpfte CH₂-Gruppen gemeinsam durch eine C₅-C₇-Cycloalkandiylgruppe ersetzt sein können und C₆-C₁₄-Arylendiyl, das unsubstituiert ist oder 1 oder 2 Substituenten aufweist, die unter C₁-C₄-Alkyl, C₁-C₄-Alkoxy und SO₃H ausgewählt sind, und
B' ausgewählt wird unter Alkandiylresten mit 4 bis 20 C-Atomen.

12. Oligoamide nach Anspruch 11, die erhältlich sind durch Umsetzung
a) wenigstens einer Aminoverbindung, die 2 primäre Aminogruppen aufweist, insbesondere ausgewählt aus Verbindungen der Formel V1
H₂N-A-NH₂ (V1)
worin A ausgewählt wird unter Alkandiylresten mit 2 bis 20 C-Atomen, in denen 2 miteinander verknüpfte CH₂-Gruppen gemeinsam durch eine C₅-C₇-Cycloalkandiylgruppe ersetzt sein können, und Gruppen der Formel (A"-O)ₚ-A", worin A" für C₂-C₄-Alkandiyl steht und p für eine ganze Zahl im Bereich von 1 bis 20 steht, wobei die Wiederholungseinheiten A"-O gleich oder verscheiden sein können,
mit
b) wenigstens einer amidbildenden Verbindung, die unter Dicarbonsäuren, deren amidbildenden Derivaten und Lactamen ausgewählt ist.

13. Oligoamide nach Anspruch 11, wobei die amidbildende Verbindung ausgewählt ist unter Dicarbonsäuren der Formel V2,
HOOC-B-COOH (V2)
und deren amidbildenden Derivaten, worin
B ausgewählt ist aus einer kovalenten Bindung,
Alkandiylresten mit 1 bis 20 C-Atomen, worin 2 miteinander verknüpfte CH₂-Gruppen gemeinsam durch eine C₅-C₇-Cycloalkandiylgruppe ersetzt sein können, und
Arylen, das unsubstituiert ist oder 1, 2 oder 3 Substituenten aufweist, die unter C₁-C₄-Alkyl, C₁-C₄-Alkoxy und SO₃H ausgewählt sind, und worin B insbesondere für 1,4-Butandiyl steht.

14. Oligoamide nach Anspruch 11, wobei die amidbildende Verbindung ausgewählt ist aus Lactamen und deren Mischungen mit Dicarbonsäuren und deren amidbildenden Derivaten und wobei das Lactam insbesondere Caprolactam ist.

15. Oligoamide nach einem der Ansprüche 11 bis 13, die wenigstens eines, insbesondere wenigstens 2 oder 3 der folgenden Merkmale i) bis iii) aufweisen:
i) die Oligoamide sind wasserunlöslich und partikelförmig, wobei die Oligoamidpartikel Teilchengrößen im Bereich von 1 nm bis 500 µm, insbesondere 5 nm bis 100 µm aufweisen,
ii) die Oligoamide sind wasserunlöslich und partikelförmig, wobei die mittlere Teilchengröße (Gewichtsmittel) der Oligoamidpartikel im Bereich von 5 nm bis 100 µm, insbesondere 1 µm bis 50 µm liegt,
iii) die Oligoamide weisen weniger als 100 µmol/g Carboxylgruppen auf.

## Claims

1. A washing agent, washing additive agent, laundry pretreatment agent or cleaning agent, containing a dye transfer inhibitor in the form of an oligoamide which has at least 750 µmol/g of basic amino groups, in addition to conventional ingredients which are compatible with this component, wherein the oligoamide is substantially formed of repeating units of formulae la and/or Ib and optionally branching units of formulae II and/or II', 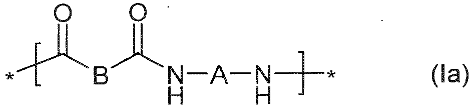 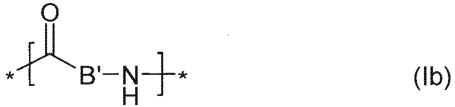 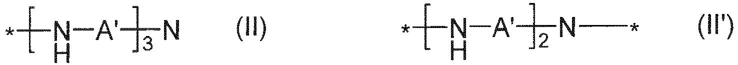 in which
A is selected from alkanediyl functional groups having from 2 to 20 C atoms, where 1, 2, 3, 4 or 5 non-adjacent CH₂ groups can be replaced by a corresponding number of NH groups, and/or where 2 interlinked CH₂ groups can be jointly replaced by a C₅-C₇ cycloalkanediyl group, and groups of the formula (A"-O)ₚ-A', where A" represents C₂-C₄ alkanediyl, and p represents an integer in the range of from 1 to 20, wherein the repeating units A"-O can be identical or different;
A' is selected from alkanediyl functional groups having from 2 to 20 C atoms, where 1, 2, 3, 4 or 5 non-adjacent CH₂ groups can be replaced by a corresponding number of NH groups, and/or where 2 interlinked CH₂ groups can be jointly replaced by a C₅-C₇ cycloalkanediyl group;
B is selected from a covalent bond, alkanediyl having from 1 to 20 C atoms, where 2 interlinked CH₂ groups can be jointly replaced by a C₅-C₇ cycloalkanediyl group, and C₆-C₁₄ arylenediyl, which is unsubstituted or has 1 or 2 substituents, which are selected from C₁-C₄ alkyl, C₁-C₄ alkoxy and SO₃H, and
B' is selected from alkanediyl functional groups having from 4 to 20 C atoms; wherein the agent contains from 0.05 to 20 wt.% of the oligoamide.

2. The agent according to claim 1, **characterized in that** it contains from 0.1 wt.% to 5 wt.% of the oligoamide.

3. The agent according to claim 1 or 2, **characterized in that** it contains the oligoamide applied to a water-insoluble cloth.

4. The use of oligoamides, which have at least 750 µmol/g of basic amino groups, as an additive in laundry detergent compositions, wherein the oligoamides are substantially formed of the repeating units of formulae la and/or Ib defined in claim 1 and optionally the branching units of formulae II and/or II' defined in claim 1.

5. The use of oligoamides, which have at least 750 µmol/g of basic amino groups, for preventing the transfer of textile dyes from colored textiles to uncolored or differently colored textiles when said textiles are washed together in aqueous solutions that contain in particular surfactants, or for preventing the change of the perceived color of textiles when said textiles are washed in aqueous solutions that contain in particular surfactants, wherein the oligoamides are substantially formed of the repeating units of formulae la and/or Ib defined in claim 1 and optionally the branching units of formulae II and/or II' defined in claim 1.

6. A method for washing colored textiles in surfactant-containing aqueous solutions, **characterized in that** a surfactant-containing aqueous solution is used which contains an oligoamide which has at least 750 µmol/g of basic amino groups, the oligoamide being substantially formed of the repeating units of formulae la and/or Ib defined in claim 1 and optionally the branching units of formulae II and/or II' defined in claim 1.

7. The agent, use or method according to one of the preceding claims, **characterized in that** the oligoamides can be obtained by reacting
a) at least one amino compound, which has 2 primary amino groups, in particular selected from compounds of formula V1
H₂N-A-NH₂ (V1)
in which A is selected from alkanediyl functional groups having from 2 to 20 C atoms, where 1, 2, 3, 4 or 5 non-adjacent CH₂ groups can be replaced by a corresponding number of NH groups, and/or where 2 interlinked CH₂ groups can be jointly replaced by a C₅-C₇ cycloalkanediyl group, and groups of the formula (A"-O)ₚ- A", where A" represents C₂-C₄ alkanediyl and p represents an integer in the range of from 1 to 20, it being possible for the repeating units A"-O to be identical or different,
with
b) at least one amide-forming compound which is selected from dicarboxylic acids, amide-forming derivatives thereof and lactams.

8. The agent, use or method according to claim 7, **characterized in that** the amide-forming compound is selected from dicarboxylic acids of formula V2,
HOOC-B-COOH (V2)
and amide-forming derivatives thereof, in which
B is selected from a covalent bond, alkanediyl functional groups having from 1 to 20 C atoms, where 2 interlinked CH₂ groups can be jointly replaced by a C₅-C₇ cycloalkanediyl group, and arylene, which is unsubstituted or has 1, 2 or 3 substituents, which are selected from C₁-C₄ alkyl, C₁-C₄ alkoxy and SO₃H, and in which B in particular represents 1,4-butanediyl.

9. The agent, use or method according to claim 7, **characterized in that** the amide-forming compound is selected from lactams and mixtures thereof with dicarboxylic acids and amide-forming derivatives thereof, and the lactam being in particular caprolactam.

10. The agent, use or method according to one of the preceding claims, wherein the oligoamides have at least one, in particular at least 2, 3 or 4, of the following features i) to iv):
i) the oligoamides are water-insoluble and particulate, wherein the oligoamide particles have particle sizes in the range of from 1 nm to 500 µm, in particular from 5 nm to 100 µm,
ii) the oligoamides are water-insoluble and particulate, wherein the average particle size (weight average) of the oligoamide particles is in the range of from 5 nm to 100 µm, in particular from 1 µm to 50 µm,
iii) the oligoamides have less than 100 µmol/g of carboxyl groups,
iv) the oligoamides have a number average molecular weight in the range of from 200 g/mol to 5000 g/mol.

11. Oligoamides, which have at least 750 µmol/g of basic amino groups and a number average molecular weight in the range of from 200 g/mol to 5000 g/mol, and which are substantially formed of repeating units of formulae la and/or Ib and optionally branching units of formulae II and/or II', 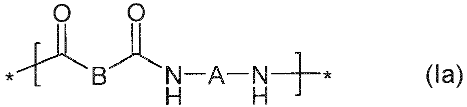 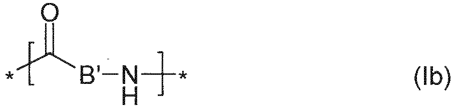 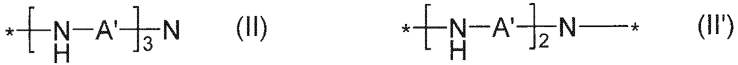 in which
A is selected from alkanediyl functional groups having from 2 to 20 C atoms, where 2 interlinked CH₂ groups can be replaced by a C₅-C₇ cycloalkanediyl group, and groups of the formula (A"-O)ₚ-A', where A" represents C₂-C₄ alkanediyl, and p represents an integer in the range of from 1 to 20, wherein the repeating units A"-O can be identical or different,
A' is selected from alkanediyl functional groups having from 2 to 20 C atoms, where 1, 2, 3, 4 or 5 non-adjacent CH₂ groups can be replaced by a corresponding number of NH groups, and/or where 2 interlinked CH₂ groups can be jointly replaced by a C₅-C₇ cycloalkanediyl group;
B is selected from a covalent bond, alkanediyl functional groups having from 1 to 20 C atoms, where 2 interlinked CH₂ groups can be jointly replaced by a C₅-C₇ cycloalkanediyl group, and C₆-C₁₄ arylenediyl, which is unsubstituted or has 1 or 2 substituents, which are selected from C₁-C₄ alkyl, C₁-C₄ alkoxy and SO₃H, and
B' is selected from alkanediyl functional groups having from 4 to 20 C atoms.

12. The oligoamides according to claim 11, which can be obtained by reacting
a) at least one amino compound, which has 2 primary amino groups, in particular selected from compounds of formula V1
H₂N-A-NH₂ (V1)
in which A is selected from alkanediyl functional groups having from 2 to 20 C atoms, where 2 interlinked CH₂ groups can be replaced by a C₅-C₇ cycloalkanediyl group, and groups of the formula (A"-O)ₚ- A", where A" represents C₂-C₄ alkanediyl and p represents an integer in the range of from 1 to 20, wherein the repeating units A"-O can be identical or different,
with
b) at least one amide-forming compound which is selected from dicarboxylic acids, amide-forming derivatives thereof and lactams.

13. The oligoamides according to claim 11, wherein the amide-forming compound is selected from dicarboxylic acids of formula V2,
HOOC-B-COOH (V2)
and amide-forming derivatives thereof, in which
B is selected from a covalent bond, alkanediyl functional groups having from 1 to 20 C atoms, where 2 interlinked CH₂ groups can be jointly replaced by a C₅-C₇ cycloalkanediyl group, and arylene, which is unsubstituted or has 1, 2 or 3 substituents, which are selected from C₁-C₄ alkyl, C₁-C₄ alkoxy and SO₃H,
and in which B in particular represents 1,4-butanediyl.

14. The oligoamides according to claim 11, wherein the amide-forming compound is selected from lactams and mixtures thereof with dicarboxylic acids and amide-forming derivatives thereof, and wherein the lactam is in particular caprolactam.

15. The oligoamides according to one of claims 11 to 13, which have at least one, in particular at least 2 or 3, of the following features i) to iii):
i) the oligoamides are water-insoluble and particulate, wherein the oligoamide particles have particle sizes in the range of from 1 nm to 500 µm, in particular from 5 nm to 100 µm,
ii) the oligoamides are water-insoluble and particulate, wherein the average particle size (weight average) of the oligoamide particles is in the range of from 5 nm to 100 µm, in particular from 1 µm to 50 µm,
iii) the oligoamides have less than 100 µmol/g of carboxyl groups.

## Revendications

1. Agent de lavage, d'additif de lavage, de prétraitement de lessive ou de nettoyage contenant un inhibiteur de transfert d'encre sous la forme d'un oligoamide qui possède au moins 750 µmol/g en groupes amino basiques, outre des ingrédients classiques compatibles avec ce composant, dans lequel l'oligoamide est pour l'essentiel constitué de motifs de répétition des formules la et/ou Ib et le cas échéant de motifs de ramification des formules II et/ou II', 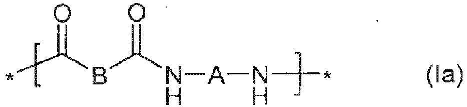 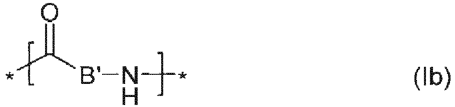 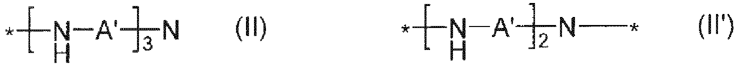 dans lesquelles
A est sélectionné parmi les résidus alcane-diyle comportant 2 à 20 atomes de C, dans lesquelles 1, 2, 3, 4 ou 5 groupes CH₂ non-adjacents peuvent être remplacés par un nombre correspondant de groupes NH, et/ou dans lesquelles 2 groupes CH₂ associés entre eux peuvent être remplacés collectivement par un groupe cycloalcanediyle en C₅-C₇, et des groupes de la formule (A"-O)ₚ-A', dans lesquelles A" représente un alcanediyle en C₂-C₄, et p représente un nombre entier compris dans la plage allant de 1 à 20, dans lequel les motifs de répétition A"-O peuvent être identiques ou différents ;
A' est sélectionné parmi les résidus alcane-diyle comportant 2 à 20 atomes de C, dans lesquelles 1, 2, 3, 4 ou 5 groupes CH₂ non-adjacents peuvent être remplacés par un nombre correspondant de groupes NH, et/ou dans lesquelles 2 groupes CH₂ associés entre eux peuvent être remplacés collectivement par un groupe cycloalcanediyle en C₅-C₇ ;
B est sélectionné parmi une liaison covalente, alcane-diyle comportant 1 à 20 atomes de C, dans lesquelles 2 groupes CH₂ associés entre eux peuvent être remplacés collectivement par un groupe cycloalcanediyle en C₅-C₇ et arylènediyle en C₆-C₁₄, qui est non-substitué ou présente 1 ou 2 substituants qui sont sélectionnés dans alkyle en C₁-C₄, alcoxy en C₁-C₄ et SO₃H, et
B' est sélectionné parmi les résidus alcanediyle comportant 4 à 20 atomes de C ; dans lequel l'agent contient 0,05 à 20 % en poids de l'oligoamide.

2. Agent selon la revendication 1, **caractérisé en ce qu'**il contient de 0,1 % en poids à 5 % en poids de l'oligoamide.

3. Agent selon la revendication 1 ou 2, **caractérisé en ce qu'**il contient l'oligoamide appliqué sur un tissu insoluble dans l'eau.

4. Utilisation d'oligoamides présentant au moins 750 µmol/g en groupes amino basiques, en tant qu'additifs dans des compositions d'agent de nettoyage de textiles, dans laquelle les oligoamides sont pour l'essentiel constitués des motifs de répétition des formules la et/ou Ib définis dans la revendication 1 et le cas échéant des motifs de ramification des formules II et/ou II' définis dans la revendication 1.

5. Utilisation d'oligoamides présentant au moins 750 µmol/g en groupes amino basiques, afin d'éviter le transfert de colorants textiles de textiles colorés sur des textiles non-colorés ou d'une autre couleur lors de leur lavage en commun dans des solutions aqueuses à forte teneur en tensioactifs, ou afin d'éviter l'altération de l'impression de couleur de textiles lors de leur lavage dans des solutions aqueuses à forte teneur en tensioactifs, dans laquelle les oligoamides sont pour l'essentiel constitués des motifs de répétition des formules Ia et/ou Ib définis dans la revendication 1 et le cas échéant des motifs de ramification des formules II et/ou II' définis dans la revendication 1.

6. Procédé de lavage de textiles colorés dans des solutions aqueuses contenant des tensioactifs, **caractérisé en ce qu'**on utilise une solution aqueuse contenant des tensioactifs qui contient un oligoamide présentant au moins 750 µmol/g en groupes amino basiques, dans lequel l'oligoamide est pour l'essentiel constitué des motifs de répétition des formules la et/ou Ib définis dans la revendication 1 et le cas échéant des motifs de ramification des formules II et/ou II' définis dans la revendication 1.

7. Agent, utilisation ou procédé selon l'une quelconque des revendications précédentes, **caractérisé en ce que** les oligoamides sont produits par conversion
a) d'au moins un composé amino présentant 2 groupes amino primaires, en particulier sélectionné parmi les composés de la formule V1
H₂N-A-NH₂ (V1)
dans laquelle A est sélectionné parmi les résidus alcane-diyle comportant 2 à 20 atomes de C, dans lesquelles 1, 2, 3, 4 ou 5 groupes CH₂ non-adjacents peuvent être remplacés par un nombre correspondant de groupes NH, et/ou dans lesquelles 2 groupes CH₂ associés entre eux peuvent être remplacés collectivement par un groupe cycloalcanediyle en C₅-C₇, et des groupes de la formule (A"-O)ₚ- A", dans lesquelles A" représente un alcanediyle en C₂-C₄, et p représente un nombre entier compris dans la plage allant de 1 à 20, dans lequel les motifs de répétition A"-O peuvent être identiques ou différents ;
avec
b) au moins un composé de formation d'amide, qui est sélectionné parmi les acides dicarboxyliques, leurs dérivés formant des amides et les lactames.

8. Agent, utilisation ou procédé selon la revendication 7, **caractérisé en ce que** le composé formant un amide est sélectionné parmi les acides dicarboxyliques de la formule V2,
HOOC-B-COOH (V2)
et leurs dérivés formant un amide, dans lesquels
B est sélectionné parmi une liaison covalente, des résidus alcanediyles comportant 1 à 20 atomes de C, dans lesquels 2 groupes CH₂ associés peuvent être remplacés collectivement par un groupe cycloalcanediyle en C₅-C₇, et des aryles, substitués ou présentant 1, 2 ou 3 substituants, qui sont sélectionnés parmi l'alkyle en C₁-C₄, l'alcoxy en C₁-C₄ et SO₃H, et dans lesquels B représente en particulier le 1,4-butanediyle.

9. Agent, utilisation ou procédé selon la revendication 7, **caractérisé en ce que** le composé formant un amide est sélectionné parmi les lactames et leurs mélanges avec des acides dicarboxyliques et leurs dérivés formant des amides et dans lesquels le lactame est en particulier du caprolactame.

10. Agent, utilisation ou procédé selon l'une quelconque des revendications précédentes, dans lesquels les oligoamides présentent au moins une, en particulier au moins 2, 3 ou 4 des caractéristiques i) à iv) suivantes :
i) les oligoamides sont insolubles dans l'eau et en forme de particules, dans lesquels les particules d'oligoamide possèdent des tailles de particule comprises dans la plage allant de 1 nm à 500 µm, en particulier de 5 nm à 100 µm,
ii) les oligoamides sont insolubles dans l'eau et en forme de particules, dans lesquels la taille moyenne des particules (moyenne en poids) des particules d'oligoamide est comprise dans la plage allant de 5 nm à 100 µm, en particulier de 1 µm à 50 µm,
iii) les oligoamides présentent moins de 100 µmol/g de groupes carboxyle,
iv) les oligoamides possèdent un poids moléculaire moyen en nombre compris dans la plage allant de 200 g/mol à 5 000 g/mol.

11. Oligoamides présentant au moins 750 µmol/g en groupes amino basiques et un poids moléculaire moyen en nombre compris dans la plage allant de 200 g/mol à 5 000 g/mol, et qui sont pour l'essentiel constitués de motifs de répétition des formules la et/ou Ib et le cas échéant de motifs de ramification des formules II et/ou II', 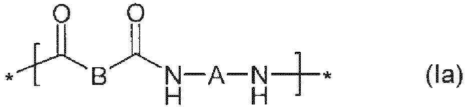 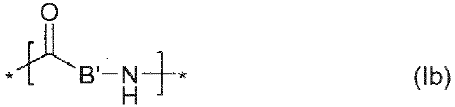 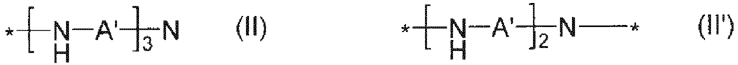 dans lesquelles
A est sélectionné parmi les résidus alcane-diyle comportant 2 à 20 atomes de C, dans lesquelles 2 groupes CH₂ associés entre eux peuvent être remplacés collectivement par un groupe cycloalcanediyle en C₅-C₇, et des groupes de la formule (A"-O)ₚ-A', dans lesquelles A" représente un alcanediyle en C₂-C₄, et p représente un nombre entier dans la plage allant de 1 à 20, dans lequel les motifs de répétition A"-O peuvent être identiques ou différents ;
A' est sélectionné parmi les résidus alcane-diyle comportant 2 à 20 atomes de C, dans lesquelles 1, 2, 3, 4 ou 5 groupes CH₂ non-adjacents peuvent être remplacés par un nombre correspondant de groupes NH, et/ou dans lesquelles 2 groupes CH₂ associés entre eux peuvent être remplacés collectivement par un groupe cycloalcanediyle en C₅-C₇ ;
B est sélectionné parmi une liaison covalente, des résidus alcane-diyles comportant 1 à 20 atomes de C, dans lesquelles 2 groupes CH₂ associés entre eux peuvent être remplacés collectivement par un groupe cycloalcanediyle en C₅-C₇ et arylènediyle en C₆-C₁₄, qui est non-substitué ou présente 1 ou 2 substituants qui sont sélectionnés dans l'alkyle en C₁-C₄, l'alcoxy en C₁-C₄ et SO₃H, et
B' est sélectionné parmi les résidus alcane-diyles comportant 4 à 20 atomes de C.

12. Oligoamides selon la revendication 11, qui sont obtenus par la conversion
a) d'au moins un composé amino présentant 2 groupes amino primaires, en particulier sélectionné parmi les composés de la formule V1
H₂N-A-NH₂ (V1)
dans laquelle A est sélectionné parmi les résidus alcane-diyle comportant 2 à 20 atomes de C, dans lesquelles 2 groupes CH₂ associés entre eux peuvent être remplacés collectivement par un groupe cycloalcanediyle en C₅-C₇, et des groupes de la formule (A"-O)ₚ-A", dans lesquelles A" représente un alcanediyle en C₂-C₄, et p représente un nombre entier dans la plage allant de 1 à 20, dans lequel les motifs de répétition A"-O peuvent être identiques ou différents,
avec
b) au moins un composé de formation d'amide, qui est sélectionné parmi les acides dicarboxyliques, leurs dérivés formant des amides et les lactames.

13. Oligoamides selon la revendication 11, dans lesquels le composé formant un amide est sélectionné parmi les acides dicarboxyliques de la formule V2,
HOOC-B-COOH (V2)
et leurs dérivés formant un amide, dans lesquels
B est sélectionné parmi une liaison covalente, des résidus alcane-diyles comportant 1 à 20 atomes de C, dans lesquels 2 groupes CH₂ associés peuvent être remplacés collectivement par un groupe cycloalcanediyle en C₅-C₇, et
des aryles, substitués ou présentant 1, 2 ou 3 substituants, qui sont sélectionnés parmi l'alkyle en C₁-C₄, l'alcoxy en C₁-C₄ et SO₃H,
et dans lesquels B représente en particulier le 1,4-butanediyle.

14. Oligoamides selon la revendication 11, dans lesquels le composé formant un amide est sélectionné parmi les lactames et leurs mélanges avec des acides dicarboxyliques et leurs dérivés formant des amides et dans lesquels le lactame est en particulier du caprolactame.

15. Oligoamides selon l'une quelconque des revendications 11 à 13, qui présentent au moins une, en particulier au moins 2, ou 3 des caractéristiques i) à iii) suivantes :
i) les oligoamides sont insolubles dans l'eau et en forme de particules, dans lesquels les particules d'oligoamide possèdent des tailles de particule allant de 1 nm à 500 µm, en particulier de 5 nm à 100 µm,
ii) les oligoamides sont insolubles dans l'eau et en forme de particules, dans lesquels la taille moyenne des particules (moyenne en poids) des particules d'oligoamide est comprise dans la plage de 5 nm à 100 µm, en particulier de 1 µm à 50 µm,
iii) les oligoamides présentent moins de 100 µmol/g de groupes carboxyle.
